(19) **Europäisches Patentamt / European Patent Office / Office européen des brevets**

(11) **EP 3 803 271 B1**

(12) **EUROPEAN PATENT SPECIFICATION**

(45) Date of publication and mention of the grant of the patent:
**21.12.2022 Bulletin 2022/51**

(21) Application number: **19716685.3**

(22) Date of filing: **26.03.2019**

(51) International Patent Classification (IPC):
**G01C 5/06** *(2006.01)* **G01C 25/00** *(2006.01)*

(52) Cooperative Patent Classification (CPC):
**G01C 5/06; G01C 25/00**

(86) International application number:
**PCT/US2019/024015**

(87) International publication number:
**WO 2019/226225 (28.11.2019 Gazette 2019/48)**

(54) **SYSTEMS AND METHODS FOR SENSOR CALIBRATION AND LOCATION DETERMINATION**

SYSTEME UND VERFAHREN ZUR KALIBRIERUNG UND POSITIONSBESTIMMUNG EINES SENSORS

SYSTÈMES ET PROCÉDÉS D'ÉTALONNAGE DE CAPTEUR ET DE DÉTERMINATION DE POSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2018 US 201862676264 P**
**24.05.2018 US 201862676275 P**
**24.05.2018 US 201862676267 P**
**20.06.2018 US 201862687738 P**
**20.06.2018 US 201862687735 P**

(43) Date of publication of application:
**14.04.2021 Bulletin 2021/15**

(73) Proprietor: **Nextnav, LLC**
**Sunnyvale, CA 94085 (US)**

(72) Inventors:
• **DORMODY, Michael**
**San Jose, California 95123 (US)**
• **HAN, Guiyuan**
**San Jose, California 95130 (US)**
• **NAGARAJAN, Badrinath**
**Cupertino, California 95014 (US)**

(74) Representative: **FRKelly**
**27 Clyde Road**
**Dublin D04 F838 (IE)**

(56) References cited:
**US-A1- 2016 245 716 US-A1- 2016 356 875**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Aspects of this disclosure generally pertain to positioning of mobile devices.

**BACKGROUND**

Determining the exact location of a mobile device (e.g., a smart phone operated by a user) in an environment can be quite challenging, especially when the mobile device is located in an urban environment or is located within a building. Imprecise estimates of the mobile device's altitude, for example, may have life or death consequences for the user of the mobile device since the imprecise altitude estimate can delay emergency personnel response times as they search for the user on multiple floors of a building. In less dire situations, imprecise altitude estimates can lead a user to the wrong area in an environment.

Different approaches exist for estimating an altitude of a mobile device. In a barometric-based positioning system, altitude can be computed using a measurement of pressure from a calibrated pressure sensor of a mobile device along with ambient pressure measurement(s) from a network of calibrated reference pressure sensors and a measurement of ambient temperature from the network or other source. An estimate of an altitude of a mobile device ($h_{mobile}$) can be computed by the mobile device, a server, or another machine that receives needed information as follows:

$$h_{mobile} = h_{sensor} - \frac{RT_{remote}}{gM} ln\left(\frac{P_{sensor}}{P_{mobile}}\right) \text{ (Equation 1),}$$

where $P_{mobile}$ is the estimate of pressure at the location of the mobile device by a pressure sensor of the mobile device, $P_{sensor}$ is an estimate of pressure at the location of a reference pressure sensor that is accurate to within a tolerated amount of pressure from true pressure (e.g., less than 5 Pa), $T_{remote}$ is an estimate of temperature (e.g., in Kelvin) at the location of the reference pressure sensor or a different location of a remote temperature sensor, $h_{sensor}$ is an estimated altitude of the reference pressure sensor that is estimated to within a desired amount of altitude error (e.g., less than 1.0 meters), $g$ corresponds to the acceleration due to gravity, $R$ is a gas constant, and $M$ is molar mass of air (e.g., dry air or other). The minus sign (-) may be substituted with a plus sign (+) in alternative embodiments of Equation 1, as would be understood by one of ordinary skill in the art. The estimate of pressure at the location of the reference pressure sensor can be converted to an estimated reference-level pressure that corresponds to the reference pressure sensor in that it specifies an estimate of pressure at the latitude and longitude of the reference pressure sensor, but at a reference-level altitude that likely differs from the altitude of the reference pressure sensor. The reference-level pressure can be determined as follows:

$$P_{ref} = P_{sensor} \times exp\left(-\frac{gM(h_{ref} - h_{sensor})}{RT_{remote}}\right) \text{ (Equation 2),}$$

where $P_{sensor}$ is the estimate of pressure at the location of the reference pressure sensor, $P_{ref}$ is the reference-level pressure estimate, and $h_{ref}$ is the reference-level altitude. The altitude of the mobile device $h_{mobile}$ can be computed using Equation 1, where $h_{ref}$ is substituted for $h_{sensor}$ and $P_{ref}$ is substituted for $P_{sensor}$. The reference-level altitude $h_{ref}$ may be any altitude and is often set at mean sea-level (MSL). When two or more reference-level pressure estimates are available, the reference-level pressure estimates are combined into a single reference-level pressure estimate value (e.g., using an average, weighted average, or other suitable combination of the reference pressures), and the single reference-level pressure estimate value is used for the reference-level pressure estimate $P_{ref}$.

The pressure sensor of the mobile device is typically inexpensive and susceptible to drift, which leads to inaccurate computations of the altitude of the mobile device using Equation 1 or variations thereof. Thus, there is a need to determine whether a computed altitude is accurate or when to calibrate the pressure sensor of a mobile device. Approaches for knowing when a computed altitude is accurate or when a pressure sensor of a mobile device can be calibrated are described herein.

The document US2016/356875 A1 discloses generating an estimate of a receiver altitude using atmospheric reference data associated with a subset of reference nodes.

The document US2016/245716 A1 discloses initiating a calibration process of a barometer onboard a mobile device in order to identify a reference atmospheric pressure for a discernible altitude level.

In some cases, the accuracy of a computed altitude for a mobile device located in an indoor environment (e.g.,

a building or a vehicle) is affected by a stack/chimney effect and/or an HVAC (heating, ventilation, and air conditioning) effect of that indoor environment. The stack/chimney effect in an environment is typically characterized by an environment's leakiness, and affects a pressure profile of an environment based on a difference between temperature inside the environment and temperature outside the environment. When an HVAC effect is present in an environment, sudden and significant pushing or pulling of pressure (e.g., from a deliberate over-pressurization or under-pressurization) in the environment can occur while a similar push or pull of pressure does not occur outside the environment. As a result, an estimated altitude computed using pushed or pulled pressure values in the environment can translate to meters of measured altitude error. Knowing when an HVAC effect is present in an environment can help determine when estimated altitudes are likely to have too much error and need to be ignored or adjusted. Different approaches for detecting if a mobile device is located in an environment in which an adverse pressure variation effect (e.g., an HVAC effect) is affecting pressure measurements are described herein. The result of these approaches-e.g., a determination as to whether the mobile device is inside a particular environment (e.g., a building or vehicle)-is highly useful in various applications, such as determining when estimated altitudes are likely to have too much error if based on measurement of pressure determined from inside the environment.

As mentioned above, the pressure sensor of the mobile device is typically inexpensive and susceptible to drift over time. Consequently, the pressure sensor must be frequently calibrated. A typical approach for calibrating a pressure sensor determines a calibration adjustment (C) that, when applied to a measurement of pressure by the pressure sensor ($P_{mobile}$), results in an estimated altitude ($h_{mobile}$) that is within a tolerated amount of distance from the true altitude. Unfortunately, the pressure sensor of a mobile device cannot be calibrated at every location of the mobile device, especially when the mobile device is not known to be at a known altitude (e.g., of a waypoint). Local pressure variation effects at a location can produce a localized pressure that does not align with outdoor pressure in a vicinity of the location, which introduces unacceptable error into the calibration result. Such pressure variation effects are common in buildings with heating, ventilation, and air conditioning (HVAC) systems and in vehicles that generate localized variations in pressure while moving. Not knowing the true altitude of a location within a tolerated amount error makes calibration impractical at such a location. The temperature inside the mobile device can also adversely affect measurements of pressure. However, calibration still must occur on a regular basis despite the above issues. Different systems and methods for determining when to calibrate a pressure sensor of a mobile device are described in the disclosure that follows.

## BRIEF DESCRIPTION OF THE DRAWINGS

FIG. 1 depicts a process for determining when an estimated altitude of a mobile device can be used for calibration or location determination.

FIG. 2A, FIG. 2B, FIG. 2C, and FIG. 2D illustrate different implementations of a process for determining when an estimated altitude of a mobile device can be used for calibration or location determination.

FIG. 3 through FIG. 6 each depict a different process for determining an area in which a mobile device is known or believed to reside.

FIG. 7 through FIG. 10 each depict a different process for defining an area using an initial estimate of a position of a mobile device and a location confidence value.

FIG. 11 and FIG. 12 each depict a process for determining if altitude values of an area meet a threshold condition.

FIG. 13A through FIG. 13E illustrate one approach for determining when an estimated altitude of a mobile device can be used for calibration or location determination.

FIG. 14A illustrates pressure profiles inside a building, inside a vehicle, and outside the building and the vehicle during a first time period.

FIG. 14B illustrates pressure profiles inside a vehicle and outside the vehicle during a second time period when an HVAC effect in the vehicle results in a pressure profile inside the vehicle that is not aligned with a pressure profile of the outside during the second time period.

FIG. 14C illustrates pressure profiles inside a building and outside the building during a third time period when an HVAC effect in the building results in a pressure profile inside the building that is not aligned with a pressure profile of the outside during the third time period.

**FIG. 15** depicts a process for determining whether a mobile device is inside an environment experiencing adverse pressure variation conditions.

**FIG. 16A** depicts a first process for detecting a change in pressure measured by a mobile device that meets or exceeds a threshold value of change.

**FIG. 16B** depicts a second process for detecting a change in pressure measured by a mobile device that meets or exceeds a threshold value of change.

**FIG. 16C** depicts a third process for detecting a change in pressure measured by a mobile device that meets or exceeds a threshold value of change.

**FIG. 16D** depicts a fourth process for detecting a change in pressure measured by a mobile device that meets or exceeds a threshold value of change.

**FIG. 17** illustrates pressure profiles resulting from different environments with different HVAC effects, where the pressure profiles do not align with a pressure profile of an environment with no HVAC effect.

**FIG. 18A** and **FIG. 18B** illustrate an approach for determining when a mobile device is expected to be inside or outside a building.

**FIG. 19** shows an operational environment in which a pressure sensor of a mobile device may be calibrated.

**FIG. 20** depicts a process for determining when to calibrate a pressure sensor of a mobile device.

**FIG. 21** depicts a process for using weighted metric values to determine if a pressure sensor of the mobile device should be calibrated using information associated with a location at which the mobile resided.

**FIG. 22** illustrates components of a transmitter, a mobile device, and a server.

## DETAILED DESCRIPTION

Aspects of this disclosure relate to determining when an estimated altitude of a mobile device can be used for calibration or location determination, determining whether a mobile device is inside an environment experiencing adverse pressure variation conditions, and/or determining when to calibrate a pressure sensor of a mobile device. Each of these aspects are discussed below.

**Determining when an estimated altitude of a mobile device can be used for calibration or location determination**

An altitude of a mobile device can be estimated using a measurement of pressure from a pressure sensor of a mobile device. Unfortunately, the pressure sensor of the mobile device is typically inexpensive and susceptible to drift, which leads to inaccurate computations of the altitude of the mobile device. The pressure sensor of the mobile can be calibrated when the mobile device is at a known altitude, such that an estimated altitude is expected to match the known altitude. However, knowing the exact altitude of the mobile device is sometimes not possible. Approaches for determining when a pressure sensor of a mobile device can be calibrated when the true altitude of the pressure sensor is not exactly known are described herein. Also described herein are approaches for confirming whether an estimated altitude is accurate.

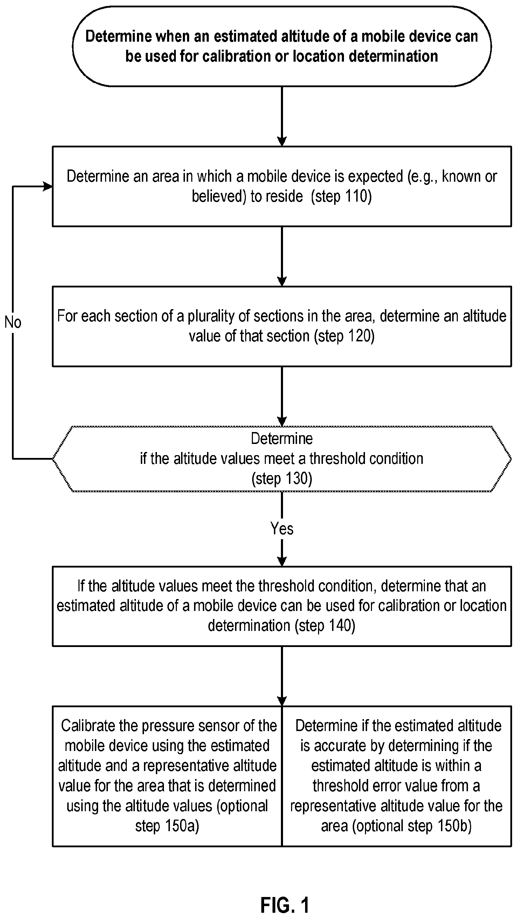

**FIG. 1** depicts a process for determining when an estimated altitude of a mobile device can be used for calibration or location determination.

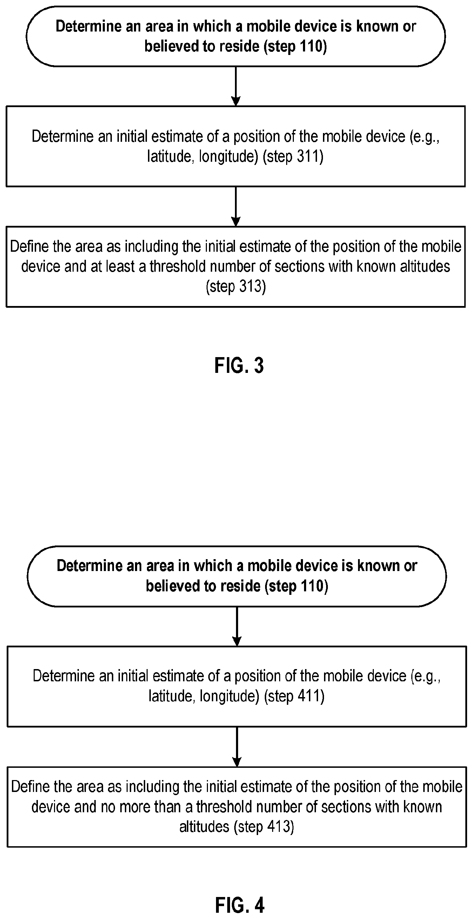

As shown, an area in which a mobile device is expected to reside is determined (step 110). The shape of the area may be any shape, including (i) a circle, (ii) a polygon, (iii) an ellipsoid, or (iv) any other shape that is centered or otherwise includes an initial twodimensional or three-dimensional estimate of a position of the mobile device. Alternatively, the shape of the area may be the shape of a network area, where the shape of the network area can be any shape, including (i) a circular coverage area centered at a location of a beacon with a radius equal to the maximum range of the beacon, (ii) overlapping portions of circular coverage areas of beacons from which the mobile device received signals, or (iii) any other shape. Alternatively, the network area can be a group of separate areas that are accessible to the mobile device. By way of example, different implementations of step 110 are shown in **FIG. 3** through **FIG. 6,** which are described later.

For each section of a plurality of sections in the determined area, an altitude value of that section is determined (step 120). Each section may be the same size (e.g., 1 square meter) or difference sizes, and the altitude value for each section may be accessed from a database or other source of data. In one embodiment, each section is a terrain tile, and the altitude value for each tile is accessed from the National Elevation Database. An optional adjustment for the terrain tile is to have an offset representing where the mobile device is located relative to the surface of the terrain (e.g., +1 m at a user's hip height, + 2 m at a user's head if being used for a call, or other height).

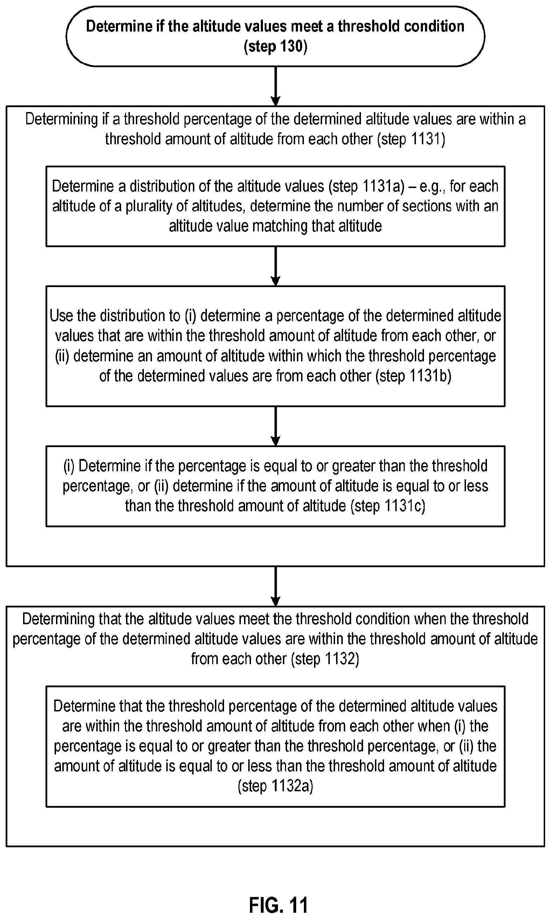

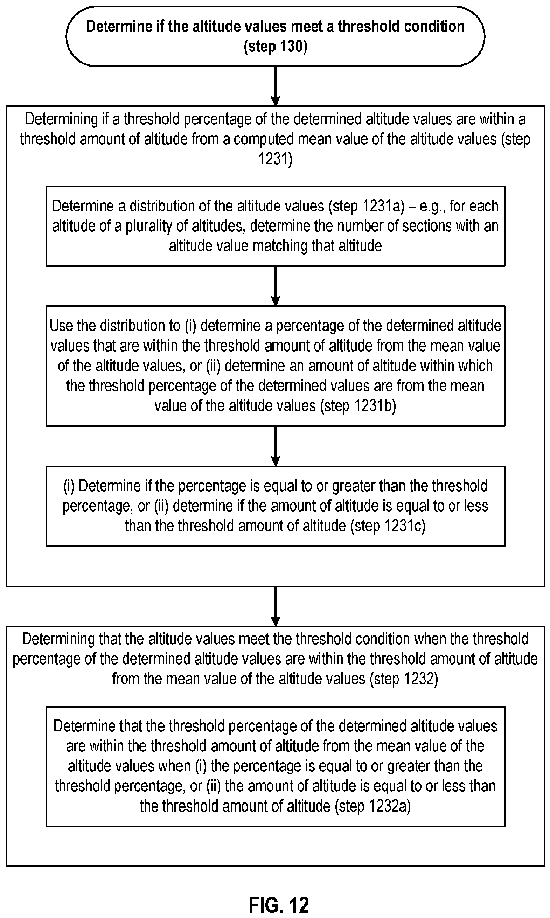

A determination is made as to whether the altitude values meet a threshold condition (step 130). In one embodiment of step 130, as discussed later in more detail with respect to **FIG. 11,** determining if the altitude values meet a threshold condition may comprise: determining if a threshold percentage of the determined altitude values are within a first threshold amount of altitude from each other. In another embodiment of step 130, as discussed later in more detail with respect to **FIG. 12,** determining if the altitude values meet a threshold condition may comprise: determining if a threshold percentage of the determined altitude values are within a second threshold amount of altitude from a mean, median or value-of-interest (e.g., the altitude of the original latitude/longitude or the center of a confidence polygon) of the determined altitude values. The first threshold amount and the second threshold amount may be the same or different. Examples of a threshold amount of altitude include a tolerated amount of error (e.g., 1 meter or less), a fraction of the tolerated amount of error (e.g., one-half), or another amount. Examples of a threshold percentage include any percentage between 90% and 100%, or any other suitable percentage. Use of a median can be more outlierresistant than a mean, and if there is a large outlier in the altitudes of the terrain tiles, the median-subtracted altitude distribution should better reflect the variation of altitude in a region. Alternatively, an outlier rejection method can be applied to the altitudes from the terrain tiles before being mean or median subtracted. The benefit of a value-of-interest is that it does not require the additional mean or median calculation once all the terrain tiles are queried-e.g., the value-of-interest is subtracted from the distribution instead of the mean or median).

If the altitude values do not meet the threshold condition, the process returns to step 110. If the altitude values meet the threshold condition, a determination is made that an estimated altitude of the mobile device can be used for determining the position of the mobile device or for calibrating a pressure sensor of the mobile device (step 140), and the estimated altitude of the mobile device is determined using a pressure measured by a pressure sensor of the mobile device if no such estimated altitude has already been determined. One approach for estimating the altitude uses Equation 1.

Optionally, the pressure sensor of the mobile device is calibrated using the estimated altitude and a representative altitude value for the area that is determined using the altitude values (optional step 150a). Examples of the representative altitude value determined using the altitude values include: (i) a mean value of the altitude values; (ii) a median value of the altitude values; (iii) the altitude value of a section at the center of the area in which the mobile device is known to reside; (iv) the most-common altitude value of the altitude values; (v) an interpolated altitude among centers of tiles; (vi) an interpolated altitude among centers of tiles neighboring an initial estimate of the mobile device's position; or (vii) any of the examples above, but with a smoothing filter applied. One advantage of the process of **FIG. 1** is that calibration can occur when the exact altitude of the mobile device is not known. Instead, only a range of possible altitudes of the mobile need be known, where the size of the range is within a tolerated value (e.g., an amount of acceptable error like 1 meter, or a fractional amount of acceptable error like 0.5*1 meter). An example of how a mobile device may be calibrated during optional step 150a is described later under the *'Calibration'* section.

Optionally, the accuracy of the estimated altitude is evaluated by determining if the estimated altitude is within a threshold error value from a representative altitude value for the area (optional step 150b). If so, the estimated altitude is considered to be accurate. If not, the estimated altitude is considered to not be accurate, and a determination is made that the pressure sensor of the mobile device needs to be calibrated. Examples of the representative altitude value are provided above in the description of step 150a. Examples of a threshold error value include a maximum tolerated error value, such as 1 meter or less, that may be optionally adjusted by a distance at which the mobile device is expected to be held above the representative altitude value.

By way of example, the process of **FIG. 1** may be performed by one or more machines that include: processor(s) or other computing device(s) (e.g., at a mobile device and/or server) for performing (e.g., that perform, or are configured, adapted or operable to perform) each step, and data source(s) at which any data identified in the processes is stored for later access during the processes.

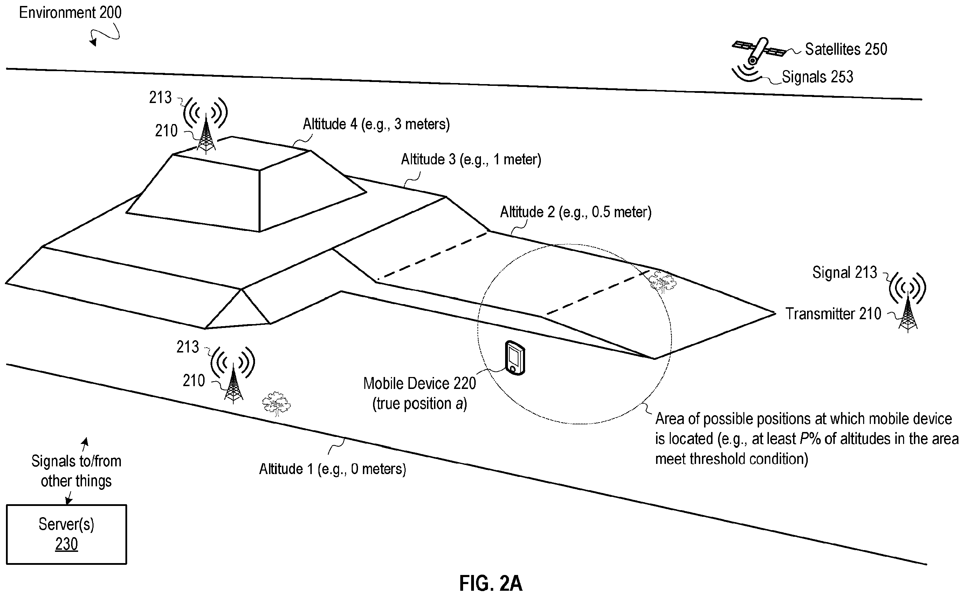

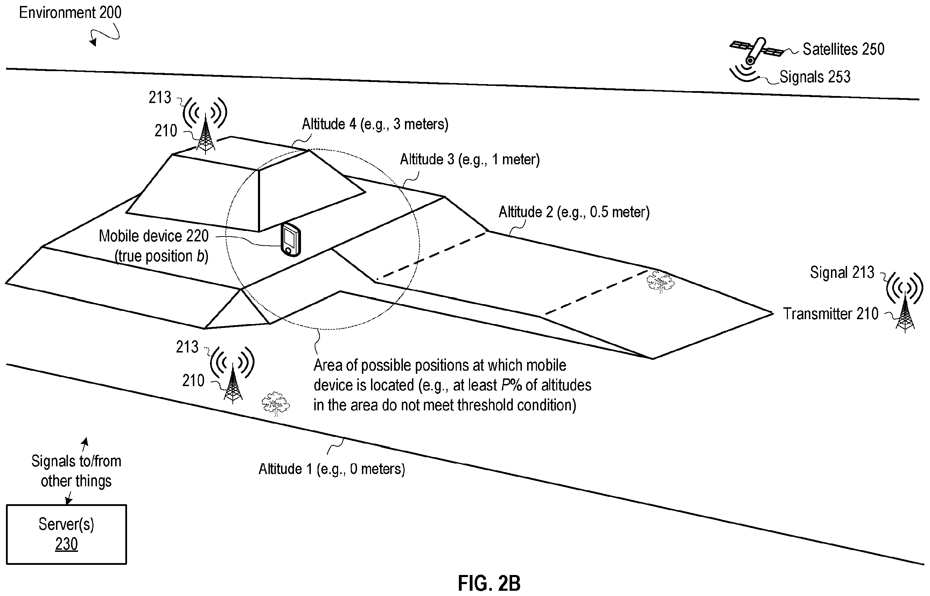

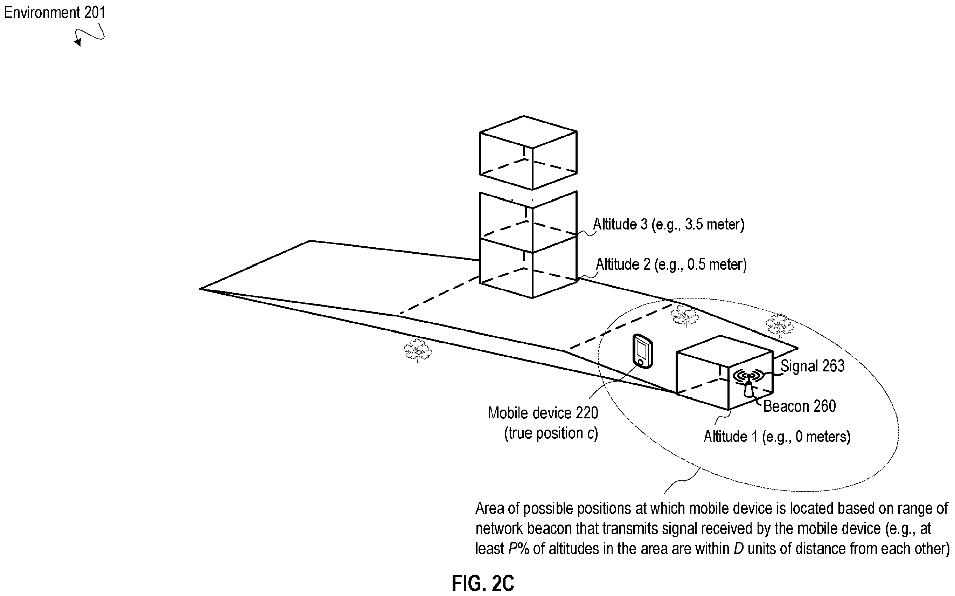

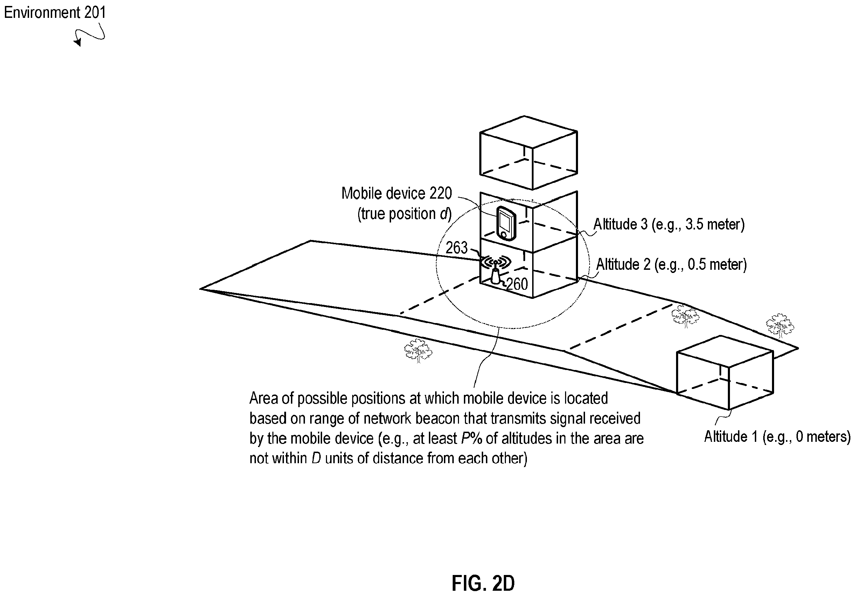

For purposes of illustrating the process of **FIG. 1,** attention is now drawn to **FIG. 2A, FIG. 2B, FIG. 2C,** and **FIG. 2D,** which illustrate different implementations of the process depicted in **FIG. 1.**

An operational environment 200 illustrated in **FIG. 2A** and **FIG. 2B** includes a network of terrestrial transmitters 210 and a mobile device 220. Each of the transmitters 210 and the mobile device 220 may be located at different altitudes or depths. Positioning signals 213 and 253 are respectively sent to the mobile device 220 from the transmitters 210 and satellites 250 using known wireless or wired transmission technologies. The transmitters 210 may transmit the signals 213 using one or more common multiplexing parameters-e.g. time slot, pseudorandom sequence, frequency offset, or other. The mobile device 220 may take different forms, including a mobile phone, a tablet, a laptop, a tracking tag, a receiver, or another suitable device that can receive the positioning signals 213 and/or 253, and that has a pressure sensor for determining a measurement of pressure at a location of the mobile device 220. Each of the transmitters 210 may also include a pressure sensor that measures pressure, and a temperature sensor that measures temperature, at the location of that transmitter 210. Measurements of pressure and temperature can be used to compute an estimated altitude of the mobile device 220 using Equation 1.

In **FIG. 2A,** an area of possible positions at which the mobile device 220 is located may be determined (e.g., during step 110), and a determination is made as to whether a predefined percentage *P%* of altitudes in the area meet a threshold condition (e.g., during step 130). As shown, the threshold condition is met, so the altitude of the mobile device 220 can be estimated for (i) use in determining if the estimated position is accurate, (ii) use in calibrating the pressure sensor of the mobile device 220, or (iii) another use. In **FIG. 2B,** a second area of possible positions at which the mobile device 220 is located may be determined (e.g., during step 110), and a determination is made as to whether a predefined percentage *P%* of altitudes in the second area meet the threshold condition (e.g., during step 130). As shown, the threshold condition is not met, so the altitude of the mobile device 220 cannot be estimated for (i) use in determining if the estimated position is accurate, (ii) use in calibrating the pressure sensor of the mobile device 220, or (iii) another use.

An operational environment 201 illustrated in **FIG. 2C** and **FIG. 2D** includes different local beacons 260 for transmitting signals 263 that are received by a mobile device 220 at different times. Each beacon may be associated with a local area within which the signals 263 can be received. Therefore, the local area for a particular beacon can be used as an area of possible positions at which the mobile device 220 is located when the mobile device receives a signal from that beacon (during step 110). The local area may have predefined ranges of altitudes. In **FIG. 2C,** a determination is made as to whether a predefined percentage *P%* of altitudes in the local area meet a threshold condition (e.g., during step 130). As shown, the threshold condition is met, so the altitude of the mobile device 220 can be estimated for (i) use in determining if the estimated position is accurate, (ii) use in calibrating the pressure sensor of the mobile device 220, or (iii) another use. In **FIG. 2D,** a determination is made the threshold condition is not met for the altitudes of the second local area (which may include different possible floors of a building), so the altitude of the mobile device 220 cannot be estimated for (i) use in determining if the estimated position is accurate, (ii) use in calibrating the pressure sensor of the mobile device 220, or (iii) another use. Use of local areas provide a solution that accounts for altitudes of surfaces other than outdoor terrain.

Attention is now drawn to different implementations of step 110, which are shown in **FIG. 3** through **FIG. 6.**

*Determine an area in which a mobile device is known or believed to reside (step 110)*

**FIG. 3** through **FIG. 6** each depict a different process for determining an area in which a mobile device is known or believed to reside.

The process depicted in **FIG. 3** includes the steps of: determining an initial estimate of a position of the mobile device (e.g., latitude, longitude) (step 311); and defining the area as including the initial estimate of the position of the mobile device and at least a threshold number of area sections with known altitudes (step 313)-e.g., that are nearest to the initial estimate of the position. One advantage of using the process of **FIG. 3** includes needing to only know an initial estimate of the position without having to consider any expected error in the initial estimate of the position (e.g., without needing to compute or consider any location confidence value). Another advantage is ensuring the area is large enough to include all or a threshold number of possible positions of the mobile device. In addition, too few tiles can throw off the statistics in a distribution if one of those tiles happened to have a large error or was an outlier. In one embodiment, selection of sections can also involve selection of only the sections in which the mobile device could reside, and exclusion of inaccessible sections.

The process depicted in **FIG. 4** includes the steps of: determining an initial estimate of a position of the mobile device (e.g., latitude, longitude) (step 411); and defining the area as including the initial estimate of the position of the mobile device and no more than a threshold number of sections with known altitudes (step 413). One advantage of using the process of **FIG. 4** includes needing to only know an initial estimate of the position without having to consider any expected error in the initial estimate of the position (e.g., without needing to compute or consider any location confidence value). Another advantage is ensuring the size of the area is not larger than it needs to be for including all or a threshold number of possible positions of the mobile device. In addition, a maximum number of tiles/possible positions reduces computational time. In one embodiment, selection of sections can also involve selection of only the sections in which the mobile device could reside, and exclusion of inaccessible sections.

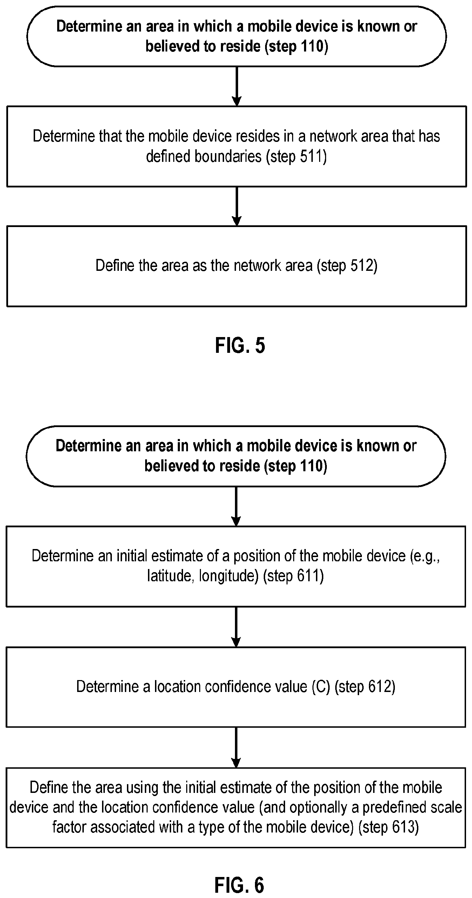

The process depicted in **FIG. 5** includes the steps of: determining that the mobile device resides in a network area that has defined boundaries (step 511); and defining the area as the network area (step 512). One advantage of using the process of **FIG. 5** includes not needing to compute an initial position of the mobile device to define the area, and instead defining the area based on a topology of a network in which the mobile device is known to reside (e.g., because the mobile device received a signal from the network, is within a geofence of the network, or other approach for determining that the mobile device is inside known boundaries of the network). In one embodiment of step 511, the network area is defined by a coverage area of a beacon (e.g., to a coverage threshold), and the mobile device is determined to reside in the network area when the mobile device receives a signal from the beacon. In another embodiment of step 511, the network area is defined by overlapping portions of coverage areas of beacons, and the mobile device is determined to reside in the network area when the mobile device receives a signal from each of the beacons. In yet another embodiment of step 511, the network area is defined by all areas in which the mobile device could connect to a network, and the mobile device is determined to reside in the network area when the mobile device is connected to the network.

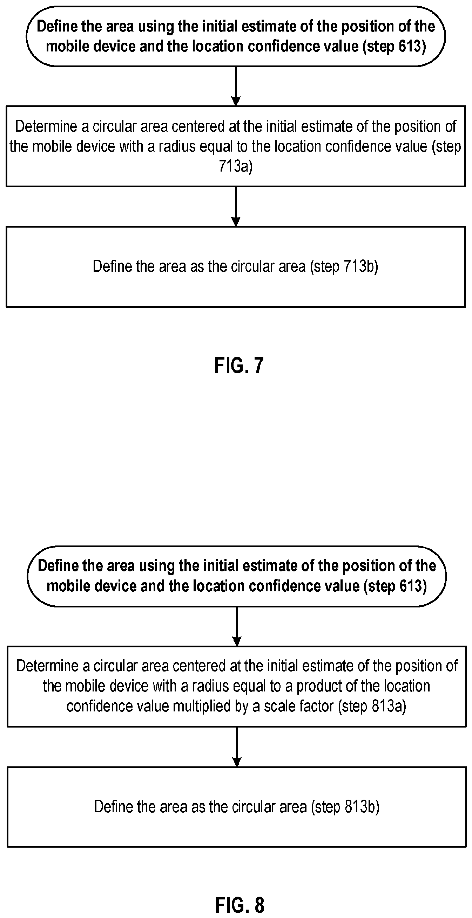

The process depicted in **FIG. 6** includes the steps of: determining an initial estimate of a position of the mobile device (e.g., latitude, longitude) (step 611); determining a location confidence value (C) (step 612); and defining the area using the initial estimate of the position of the mobile device and the location confidence value (and optionally a predefined scale factor associated with a type of the mobile device) (step 613). One advantage of using the process of **FIG. 6** includes accounting for expected error in an initial estimate of the position of the mobile device, which is used to define the area so it is highly likely the area includes all or a threshold number of possible positions of the mobile device. Different implementations of step 613 are shown in **FIG. 7** through **FIG. 10,** which are described below.

The location confidence value may be defined as the expected error in an estimated position, which may be based upon the individual errors feeding into the process used for determining the estimated position. For instance, the location confidence value is small for an estimated position determined using three or more distributed GNSS signals received by a mobile device with unobstructed views of the GNSS satellites from which the signals were received (i.e., the estimated position is considered to be highly-accurate). Alternatively, the location confidence value is large for an estimated position determined using a GNSS signal received by a mobile device with an obstructed view of the GNSS satellite from which the signal was received (i.e., the estimated position is considered to have error due to that signal).

The scale factor may be a predefined number (e.g., a number greater than 1, or a number less than 1). In one embodiment, the scale factor S is determined *a priori* by determining, for one or a variety of location morphologies, estimated positions of the mobile device (or a representative model device of the mobile device) and location confidence values for the estimated positions when the mobile device or model thereof is at different surveyed locations (e.g., locations with known position coordinates) in the one type or a variety of location morphologies. Examples of location morphologies include dense urban, urban, suburban, and rural morphologies. For each estimated position and corresponding location confidence value, a determination is made as to whether the estimated position is within the corresponding location confidence value from the corresponding surveyed location at which the estimated position was determined. A percentage of times when the estimated positions are within their corresponding location confidence values from their corresponding surveyed locations is determined (e.g., 60%). A desired percentage is determined (e.g., 90%). A determination is made as to whether the determined percentage of times meets or exceeds the desired percentage. If not, the scale factor is determined to be a number that, when multiplied to each of the location confidence values results in a percentage of times (e.g., ≥ 90%) when the estimated positions are within a product of their corresponding location confidence values and the scale factor from their corresponding surveyed locations that meets or exceeds the desired percentage (90%). Once the scale factor is computed for the mobile device, or for a representative model of the mobile device, the scale factor is stored for later use. In one embodiment that uses a scale factor, a single scale factor is determined *a priori* for the mobile device. In another embodiment that uses a scale factor, different scale factors are determined *a priori* for different morphologies (e.g., a first scale factor for a first type of morphology, ..., and an *n*th scale factor for an *n*th type of morphology, for different types of morphologies like dense urban, urban, suburban, rural, or other morphologies).

Attention is now drawn to different implementations of step 613, which are shown in **FIG. 7** through **FIG. 10.**

*Defining an area using an initial estimate of a position of a mobile device and a location confidence value (step 613)*

**FIG. 7** through **FIG. 10** each depict a different process for defining an area using an initial estimate of a position of a mobile device and a location confidence value during step 613.

The process depicted in **FIG. 7** includes the steps of: determining a circular area centered at the initial estimate of the position of the mobile device with a radius equal to the location confidence value (step 713a); and defining the area as the circular area (step 713b). One advantage of using the process of **FIG. 7** includes defining an area based on information that is typically readily available, such as the initial estimate of the position and the location confidence value.

The process depicted in **FIG. 8** includes the steps of: determining a circular area centered at the initial estimate of the position of the mobile device with a radius equal to a product of the location confidence value multiplied by a scale factor (step 813a); and defining the area as the circular area (step 813b). One advantage of using the process of **FIG. 8** includes defining an area based on a scale factor that may be specific to the type or model of mobile device, or that may be specific to characteristics of a geographic area.

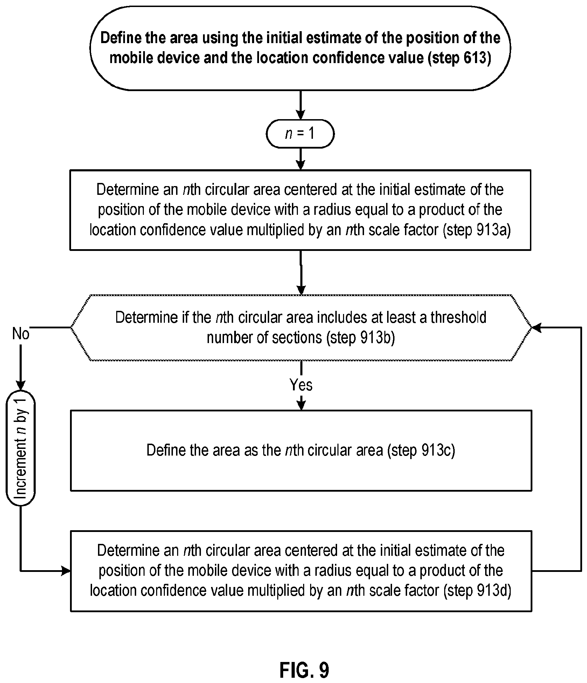

The process depicted in **FIG. 9** includes the steps of: determining a circular area centered at the initial estimate of the position of the mobile device with a radius equal to a product of the location confidence value multiplied by a scale factor (step 913a); determining if the circular area includes at least a threshold number of sections (step 913b); if the circular area includes at least the threshold number of sections, defining the area as the circular area (step 913c); and if the circular area does not include at least the threshold number of sections, determining a new circular area centered at the initial estimate of the position of the mobile device with a radius equal to a product of the location confidence value multiplied by another scale factor (step 913d), and then repeating step 913b using the new circular area. In one embodiment, the first scale factor is the same scale factor as discussed earlier, and any other scale factors are larger than the first scale factor. In another embodiment, the scale factors are a series of increasing numbers that were not predetermined for the type of mobile device. One advantage of using the process of **FIG. 9** includes having the ability to adjust the size of the area based on a particular condition (e.g., whether a candidate area includes a preferred number of sections).

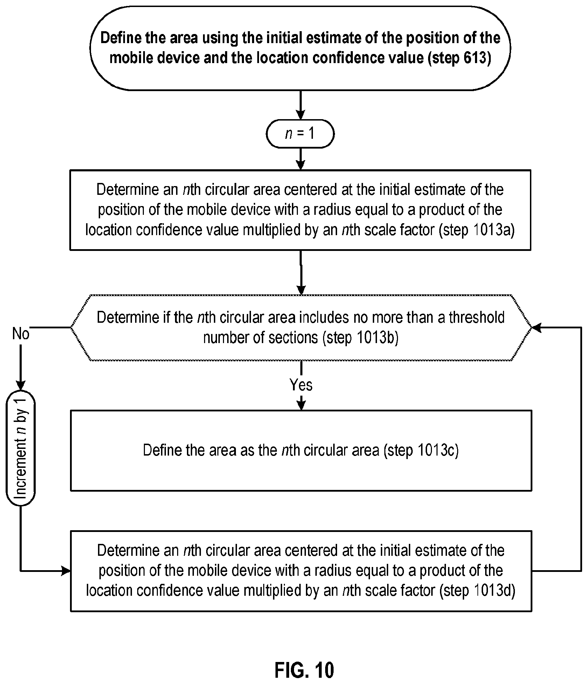

The process depicted in **FIG. 10** includes the steps of: determining a circular area centered at the initial estimate of the position of the mobile device with a radius equal to a product of the location confidence value multiplied by a scale factor (step 1013a); determining if the circular area includes no more than a threshold number of sections (step 1013b); if the circular area includes no more than the threshold number of sections, defining the area as the circular area (step 1013c); and if the circular area include at least the threshold number of sections, determining a new circular area centered at the initial estimate of the position of the mobile device with a radius equal to a product of the location confidence value multiplied by another scale factor (step 1013d), and then repeating step 1013b using the new circular area. In one embodiment, the first scale factor is the same scale factor as discussed earlier, and any other scale factors are smaller than the first scale factor. In another embodiment, the scale factors are a series of decreasing numbers that were not predetermined for the type of mobile device. One advantage of using the process of **FIG. 10** includes having the ability to adjust the size of the area based on a particular condition (e.g., whether a candidate area includes no more than a preferred number of sections).

Attention is now drawn to different implementations of step 130, which are shown in **FIG. 11** and **FIG. 12**.

*Determine if the altitude values meet a threshold condition (step 130)*

**FIG. 11** and **FIG. 12** each depict a process for determining if altitude values of an area meet a threshold condition during step 130.

The process depicted in **FIG. 11** includes the steps of: determining if a threshold percentage of the determined altitude values are within a threshold amount of altitude from each other (step 1131); and determining that the altitude values meet the threshold condition when the threshold percentage of the determined altitude values are within the threshold amount of altitude from each other (step 1132). One advantage of using the process of **FIG. 11** includes ensuring the altitude variation in an area meets a threshold condition (e.g., an altitude difference amount across certain sections is within an amount of tolerated altitude error or fraction thereof, where less steps are needed than using the mean, median or value-of-interest value of **FIG. 12).**

In a first embodiment of steps 1131 and 1132, a distribution of the altitude values is determined (step 1131a). The distribution is used to determine a percentage of the determined altitude values that are within the threshold amount of altitude from each other (step 1131b). A determination is made as to whether the percentage is equal to or greater than the threshold percentage (step 1131c). The threshold percentage of the determined altitude values are determined to be within the threshold amount of altitude from each other when the percentage is equal to or greater than the threshold percentage (step 1132a).

In a second embodiment of steps 1131 and 1132, a distribution of the altitude values is determined (step 1131a). The distribution is used to determine an amount of altitude within which the threshold percentage of the determined values are from each other (step 1131b). A determination is made as to whether the amount of altitude is equal to or less than the threshold amount of altitude (step 1131c). The threshold percentage of the determined altitude values are determined to be within the threshold amount of altitude from each other when the amount of altitude is equal to or less than the threshold amount of altitude (step 1132a).

The process depicted in **FIG. 12** includes the steps of: determining if a threshold percentage of the determined altitude values are within a threshold amount of altitude from a computed mean value of the altitude values (step 1231); and determining that the altitude values meet the threshold condition when the threshold percentage of the determined altitude values are within the threshold amount of altitude from the mean value of the altitude values (step 1232). One advantage of using the process of **FIG. 12** includes ensuring the altitude variation in an area meets a threshold condition (e.g., an altitude difference between each section from a group of sections and a mean of altitudes is within an amount of tolerated altitude error or fraction thereof, wherein a cumulative distribution function can be used for analysis after the mean value is computed).

In a first embodiment of steps 1231 and 1232, a distribution of the altitude values is determined (step 1231a).

The distribution is used to determine a percentage of the determined altitude values that are within the threshold amount of altitude from the mean value of the altitude values (step 1231b). A determination is made as to whether the percentage is equal to or greater than the threshold percentage (step 1231c). The threshold percentage of the determined altitude values are determined to be within the threshold amount of altitude from the mean value of the altitude values when the percentage is equal to or greater than the threshold percentage (step 1232a).

In a second embodiment of steps 1231 and 1222, a distribution of the altitude values is determined (step 1231a). The distribution is used to determine an amount of altitude within which the threshold percentage of the determined values are from the mean value of the altitude values (step 1231b). A determination is made as to whether the amount of altitude is equal to or less than the threshold amount of altitude (step 1231c). The threshold percentage of the determined altitude values are determined to be within the threshold amount of altitude from the mean value of the altitude values when the amount of altitude is equal to or less than the threshold amount of altitude (step 1232a).

One example of determining a distribution of the altitude values in **FIG. 11** and **FIG. 12** includes: for each altitude of a plurality of altitudes, determining the number of sections with an altitude value matching that altitude.

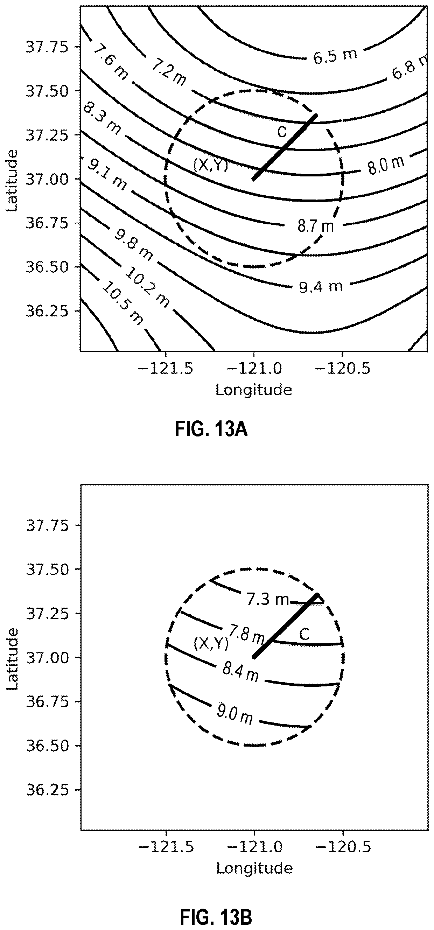

The process of **FIG. 12** is depicted as using a mean. It is noted that mean-subtracted values could be used instead, as illustrated below in **FIG. 13A** through **FIG. 13E,** which are discussed below. If the altitudes determined from the tiles or possible fixes within a contour are not equally sized, then the mean can optionally be weighted. For example, for altitudes a_i and sizes s_i, the mean altitude is:

$$a_{average} = \frac{a_0 s_0 + a_1 s_1 + \cdots + a_n s_n}{s_0 + s_1 + \cdots + s_n}.$$

*Illustration of a process for determining when an altitude of a mobile device can be estimated for use in different applications*

For purposes of illustration, **FIG. 13A** through **FIG. 13E** depict a specific approach for determining when an altitude of a mobile device can be estimated. Initially, an API is queried for an estimated position (e.g., latitude and longitude) of a mobile device along with a location confidence C associated with the estimated position. Optionally, a scale factor S is retrieved from storage, or a default value for S is 1.

If location confidence C is given as a radial distance, the estimated position and the location confidence C are used to define an area of possible positions of the mobile device within C*S from the estimated position (e.g., see **FIG. 13A).** If the location confidence C is given as a polygon, then the estimated position and the location confidence C are used to define an area of possible positions of the mobile device within the polygon scaled by S.

A plurality of tiles within the defined area are determined (e.g., see **FIG. 13B).** By way of example, the tiles may be identified as having ranges of latitude and longitude within the area of possible positions. Optionally, a determination is made as to whether at least a minimum or no more than a maximum number of tiles are included in the area, and if not, the scale factor S is respectively increased or decreased until at least the minimum or no more than the maximum number of tiles are included in the area.

From the area of possible positions, a query is made for terrain altitudes of all tiles in the area. The query may be to a database of altitudes.

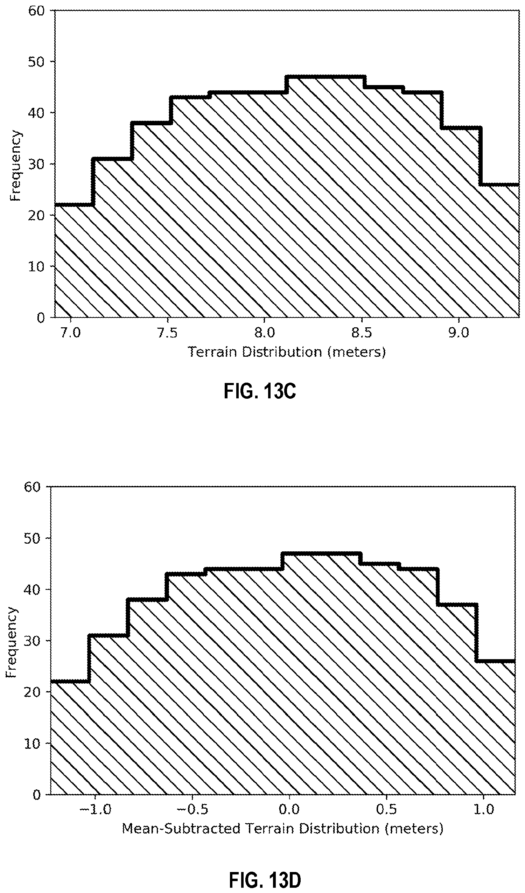

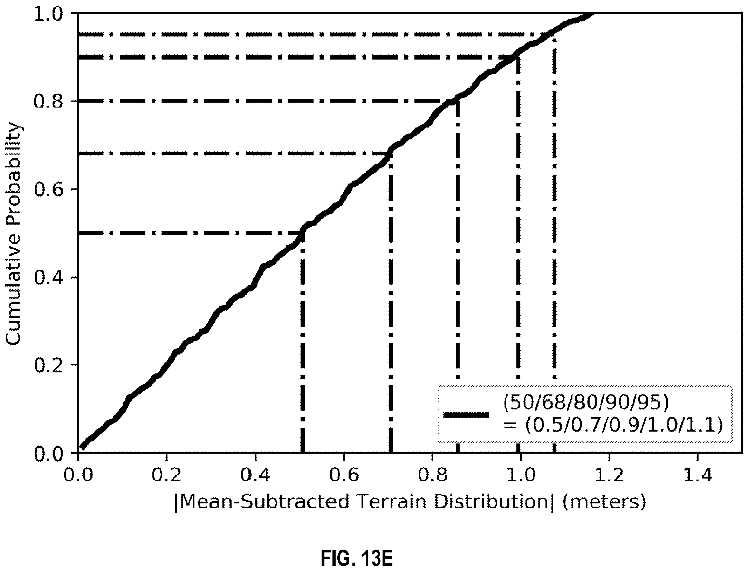

A distribution of the terrain altitudes is determined (e.g., see **FIG. 13C).** Optionally, a mean-subtracted distribution is determined (e.g., see **FIG. 13D).** From either of these distributions, a cumulative distribution function (CDF) of key values is computed, such as 10%, 30%, 50%, 68%, 80% and 90% (e.g., see **FIG. 13E).** The key values from the CDF are then used to determine if the area is flat enough such that an estimated altitude of the mobile device can be used to estimate the location of the mobile device or to calibrate the pressure sensor of the mobile device. For example, if the spread or distribution of terrain altitude falls within a predefined distance D a predefined percentage P% of the time, then the area is flat enough. Otherwise, the area is not flat enough. As shown in **FIG. 13E,** 90% of the terrain altitudes are nearly 1.5 meters from each other, and only about 60% of the terrain altitudes are within 1 meter from each other. If the distance D is 1 meter, and the percentage P is 90%., the area would not be flat enough.

In alternative embodiments of the process in **FIG.** 12 and **FIG. 13A** through **FIG.** 13E, a median or value-of-interest can be used instead of a mean.

*Calibration*

One approach for calibrating a pressure sensor of a mobile device is described below. Initially, an estimated altitude $h_{mobile}$ is computed as:

$$h_{mobile} = h_{ref} \mp \frac{RT_{remote}}{gM} \ln\left(\frac{P_{ref}}{P_{mobile}}\right) \text{ (Equation 3),}$$

where $P_{mobile}$ is the estimate of pressure at the location of the mobile device, $P_{ref}$ is an estimate of pressure at a reference location, $T_{remote}$ is an estimate of ambient temperature (e.g., in Kelvin), $h_{ref}$ is the known altitude of the reference location, $g$ corresponds to acceleration due to gravity, $R$ is a gas constant, and $M$ is molar mass of air (e.g., dry air or other). To calibrate the pressure sensor of the mobile device, the aim is to determine an adjustment to the value of $P_{mobile}$ such that $h_{mobile}$ is within a tolerated amount of distance from the true altitude of the mobile device, $h_{truth}$.

During calibration, a representative altitude value of the area in which the mobile device is expected to reside can be assigned as the true altitude of the mobile device, $h_{truth}$. Alternatively, the representative altitude value adjusted by a typical height at which the mobile device is likely to be held above the ground can be assigned as the true altitude of the mobile device, $h_{truth}$. Examples of representative altitude values are described earlier with respect to step 150a of **FIG. 1.**

Once the true altitude of the mobile device, $h_{truth}$, is determined, a calibration value C needed to adjust the estimate of pressure at the location of the mobile device, $P_{mobile}$, is determined using the formula below:

$$h_{truth} = h_{ref} \mp \frac{RT}{gM} \ln\left(\frac{P_{reference}}{P_{mobile}+C}\right) \text{ (Equation 4).}$$

Alternatively, differentiating pressure with respect to height can be used to help determine the calibration value C. The following relationship:

$$P_{at\ h_1} = P_{at\ h_2} \exp\left(\frac{gM(h_2-h_1)}{RT}\right) \text{ (Equation 5),}$$

can be used to derive the following formula:

$$\frac{dP}{dh} = \frac{gMP}{RT} \approx 0.034\frac{P}{T} \text{ (Equation 6).}$$

If a pressure measurement of by the mobile device is P = 101000 Pa and ambient temperature is T = 300 K, the formula of Equation 6 results in dP/dh ≈ 11.5 Pa/m. The values of P and T are reasonable assumptions for nominal weather, and the scale factor of 11.5 Pa / m can range between ~ 9-12 Pa/m if the weather gets cooler or hotter. This means for every meter adjustment to be made to get $h_{truth}$ to align with $h_{mobile}$ the calibration value C can be adjusted by 11.5 Pa. In this example, if $h_{mobile}$ = 12.0 m and $h_{truth}$ = 8 m, the difference in altitude can be scaled by 11.5 Pa/m to get the difference in pressure, or C = 46 Pa as shown below:

$$C = \left(h_{truth} - h_{phone}\right) \times \frac{dP}{dh} = (12 - 8) \times 11.5 = 46 \text{ (Equation 7).}$$

*Technical Benefits*

Processes described herein improve the fields of calibration and location determination by permitting more opportunities to calibrate a pressure sensor of a mobile device compared to other approaches. Calibration of pressure sensors of mobile devices is critical for providing useful measurements of pressure that are relied on to estimate an altitude of the mobile device. In particular, processes described herein can be used to determine suitable circumstances for calibration that would be overlooked by other approaches when the exact altitude of the mobile device is unknown. The additional opportunities to calibrate enable more accurate and reliable estimated positions that shorten emergency response times or otherwise improve the usefulness of estimated positions. The additional opportunities for calibration improve the use of equipment that is susceptible to producing unreliable data (e.g., a pressure sensor of a mobile device producing pressure data with lower-than-desirable accuracy due to drift or inherent resolution of the equipment) by providing for improved calibration of that equipment and data the equipment produces. As a result of the processes described herein, new and useful data is created, including data that confirms whether an estimated altitude is suitable for particular uses (e.g., calibration of a pressure sensor or estimation of a position of a mobile device). Prior approaches that do not produce this data prior to calibration or position determination are more likely to calibrate or estimate positions with less accuracy.

**Determining whether a mobile device is inside an environment experiencing adverse pressure variation conditions**

Different approaches for detecting if a mobile device is located in an environment in which an adverse pressure variation effect (e.g., an HVAC effect) is affecting pressure measurements are described herein. The result of these approaches-e.g., a determination as to whether the mobile device is inside a particular environment (e.g., a building or vehicle)-is highly useful in various applications that are also described herein.

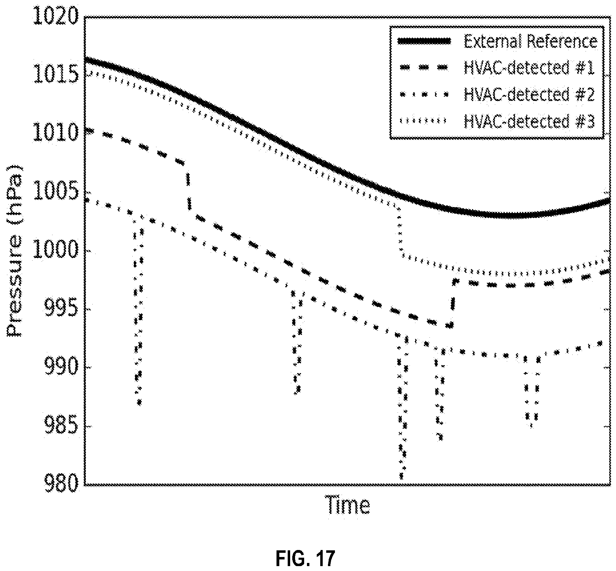

Different environments can create an HVAC effect. One example of such an environment includes a well-sealed, climate-controlled building or a clean room. Another example is a vehicle with a fairly air-tight seal. From field data, it has been observed that the HVAC effect of an environment manifests as sudden jumps (up or down) in pressure measured by a pressure sensor inside the environment, where the sudden jumps are not reflected in outdoor pressures measured by network weather sensors. The resultant pressure values after sudden jumps can be transient by lasting only a short period of time (e.g., up to a few seconds), or sustained by lasting for long periods of time (e.g., several hours). In some cases, resultant pressure values are sustained until an operator of a mobile device with the measuring pressure sensor moves. Recorded jumps can occur at particular times of the day (e.g., when an HVAC system turns on), or when a stimulus is introduced into an environment, such as when a window or door is opened. An example of different pressure profiles is found in **FIG. 17,** which shows different kinds of pressure profiles showing jumps caused by an HVAC effect. As shown, one pressure profile includes transient jumps (e.g., HVAC-detected # 3) and two other pressure profiles include sustained jumps (e.g., HVAC-detected # 1, and HVAC-detected # 2). The overall pressure contours (e.g., curves) of each of the pressure profiles may appear to be similar, but the differences in pressure between pressure profiles differ before and after jumps in a way that can introduce error into altitude computation. These differences in pressure between pressure profiles before and after jumps in one of the pressure profiles demonstrate that the pressure profiles are not "aligned" with each other.

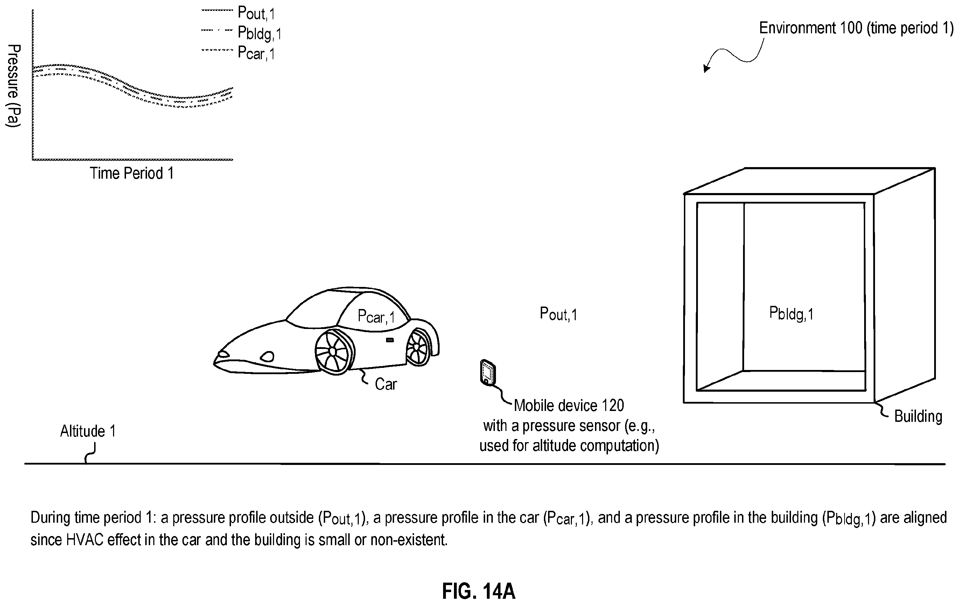

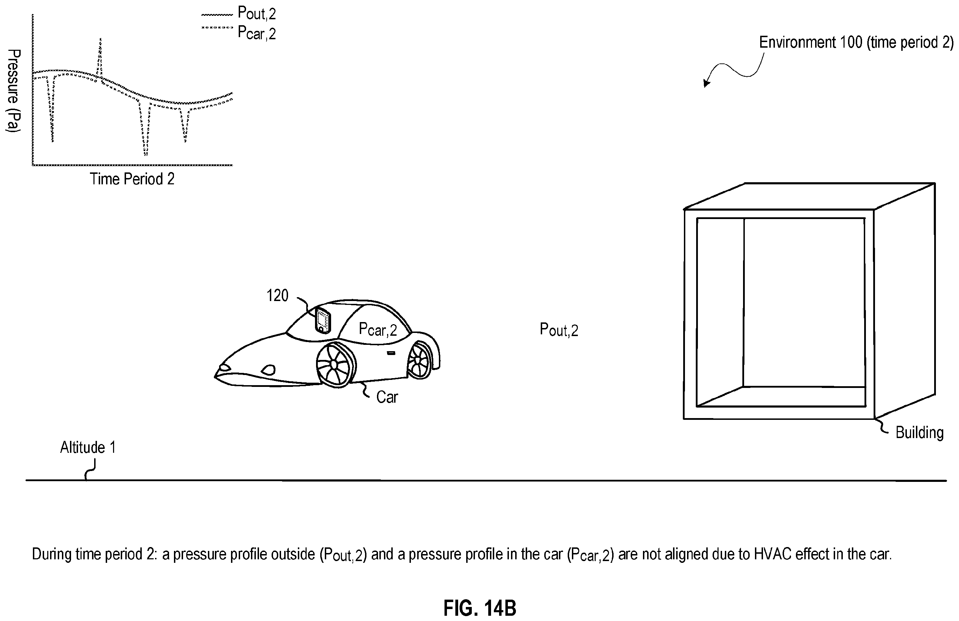

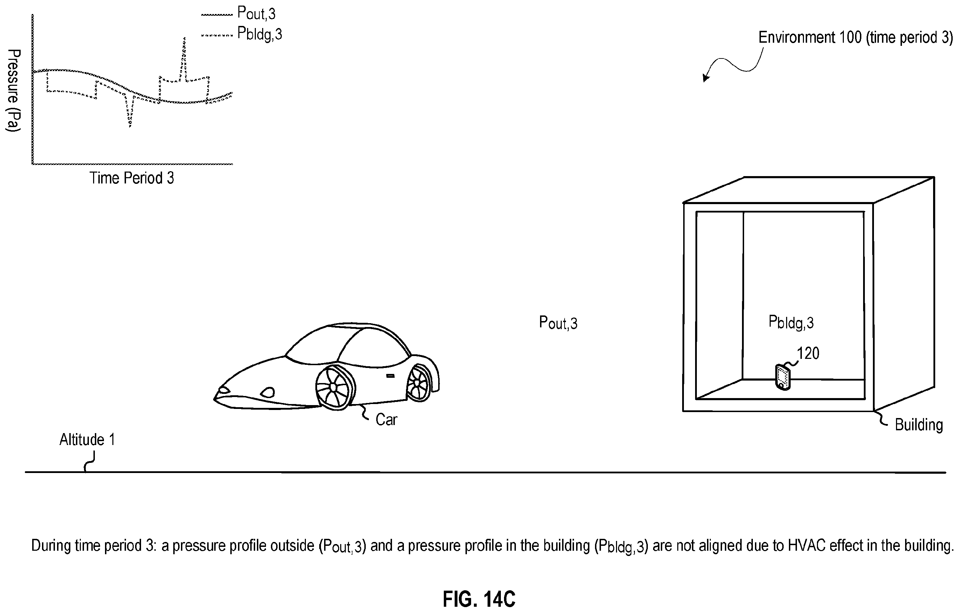

By way of example, **FIG. 14A** illustrates pressure profiles inside a building, inside a vehicle, and outside the building and the vehicle during a first time period when any HVAC effect in the building and any HVAC effect in the vehicle are minimal such that the pressure profiles during the first time period inside the building, inside the vehicle, and outside are aligned with each other. The three pressure profiles are shown as offset from each other to illustrate the same contour of each profile. However, in a situation where the pressure profiles are for a common altitude (e.g. 1 m above the ground), the three pressure profiles would align to virtually the same value. **FIG. 14B** illustrates possible pressure profiles inside the vehicle and outside the vehicle during a second time period when an HVAC effect in the vehicle results in a pressure profile inside the vehicle that is not aligned with the pressure profile of the outside for the entire period of time (e.g., there are jumps in the pressure profile of the vehicle without corresponding jumps in the pressure profile of the outside environment). As shown, threshold changes in pressure can be negative or positive. Alternatively, the pressure profile of the vehicle could resemble the pressure profile shown for the building in **FIG. 14C** (with or without the peaks). **FIG. 14C** illustrates pressure profiles inside the building and outside the building during a third time period when an HVAC effect in the building results in a pressure profile inside the building that is not aligned with the pressure profile of outside for the entire period of time (e.g., there are sustained jumps in the pressure profile of the building without corresponding sustained jumps in the pressure profile of the outside environment). As shown, threshold changes in pressure can be negative or positive. Alternatively, the pressure profile of the building could not have the peaks, or could resemble the pressure profile shown for the vehicle in **FIG. 14B.**

Knowing if a mobile device is located inside an environment affected by an HVAC effect can be helpful for many reasons. If HVAC characteristics of an environment (e.g., a building) are known, then those HVAC characteristics can be used to constrain a computed position (latitude, longitude, and/or altitude) of a mobile device as follows: (i) if a mobile device is determined to be in an environment affected by an HVAC effect (e.g., jumps in pressure are measured), but a computed position of that mobile device indicates that the mobile device is outside, the computed position can be ignored or modified to reside inside a nearby building; or (ii) if a computed position of a mobile device is determined to be inside a building with a known HVAC effect, but no such HVAC effect is detected by the mobile device, then the computed position can be ignored or modified to be outside the building.

Monitoring an HVAC effect is also useful for concluding whether a mobile device is located inside or outside an environment (e.g., a building) affected by an HVAC effect. Once a conclusion is made that a mobile device is inside or outside an environment, further actions can be taken-e.g., a determination can be made that a pressure sensor of the mobile device cannot be calibrated using pressure data during detected jumps or while the HVAC effect is present; e.g., a determination can be made that position computations need to be adjusted to account for the HVAC effect or other effects inside the environment; e.g., a map of the environment can be accessed and used for navigation or presenting other information to a user of the mobile device; and e.g., estimated altitudes are constrained to known minimum and/or maximum altitudes of the indoor environment or outdoor terrain depending on whether the mobile device is located within an indoor environment or on outdoor terrain.

Detecting an HVAC effect can also be used with other information to support certain conclusions. For example, if an HVAC effect is detected, and if the mobile device is moving at a speed or acceleration that is only possible in a vehicle, a conclusion can be made that the mobile device is in a vehicle.

The detection of a mobile device in an environment affected by an HVAC effect can also activate an application that collects pressure measurements for later use in characterizing the HVAC characteristics of the environment. For example, any recorded jumps can be timestamped and associated with a location inside an environment (e.g., a floor or a room of a building, or a section or location of a vehicle) and then stored as data depicting an HVAC effect of the environment at particular times. Over a variety of different times and days, the HVAC characteristics of the environment can be mapped. Any mapped HVAC characteristics can be used to adjust measured pressures in order to account for any detected HVAC effect of the environment.

Similarly, the detection of a mobile device in an environment affected by an HVAC effect can also activate an application that collects data used to measure the energy efficiency of an HVAC system in a LEED certified building. In some cases, the strength of a detected HVAC effect can correlate to a size of the HVAC system of an environment. Knowledge of the size can be used to determine an actual building in which a user is located, or a make and model of a vehicle in which a user is riding.

Having described the benefits of knowing when an HVAC effect is affecting pressure measured by a mobile device of a user, attention is now turned to different approaches for detecting an HVAC effect, and then using knowledge of any detected HVAC effect to determine the type of environment in which the user is most-likely to be located before performing further optional operations.

A first approach for detecting an HVAC effect involves detecting when users are inside an environment (e.g., a building or vehicle) that has a strong HVAC effect, and determining the type of environment. The detection involves confirming if a detected jump in measured pressure is caused by an HVAC effect or a change in altitude of a mobile device. An additional test may be performed to first confirm that the detected jump occurred without a corresponding jump in outdoor pressure. If a sudden change in pressure is due to a change in altitude of a mobile device (e.g., from an elevator), an inertial sensor of the mobile device (e.g., an accelerometer) can confirm if an altitude change occurred. If the inertial sensor detects that the mobile device has not changed altitudes, or has not changed an amount of altitude consistent with the change in pressure, then the change in pressure is assumed to be caused by an HVAC effect. If inertial information is unavailable, information about a building can be used to constrain vertical displacement of a mobile device-e.g., a query to a building database can retrieve the number of floors or height of the building, and if the building is short or only has 1 floor, it would likely indicate the user did not change floors. Since the change in pressure could be caused by the mobile device entering or exiting an environment affected by an HVAC effect, an additional evaluation must be made as to the likelihood the mobile device was inside the environment when the jump in pressure was detected. One embodiment computes an estimate of the position of the mobile device when the mobile device detected the pressure jump. A location confidence value (e.g., an amount of error in the estimated position) may also be computed. An area of possible positions of the mobile device is determined (e.g., a circle centered on the estimated position with a radius equal to the location confidence value and optionally scaled by a scale factor). The area of possible positions is compared to an area of accessible locations of a building that is within the amount of error from the estimated position of the mobile device (e.g., a building polygon). If an amount of the area of possible positions of the mobile device that overlaps the area of accessible locations of the building meets or exceeds a threshold percentage (e.g., 50% or other), then a determination is made that the mobile device is inside the building, and that the detected pressure change was caused by the building's HVAC system. If the amount of the area of possible positions of the mobile device that overlaps the area of accessible locations of the building does not meet or exceed the threshold percentage, then one of two conclusions can be made: (1) the mobile device entered a vehicle with strong HVAC effect; (2) the mobile device is outside the building (e.g., having existed an environment with strong HVAC effect). In one embodiment, the only conclusion is that the mobile device entered a vehicle with strong HVAC effect. In another embodiment, additional analysis of recorded pressure measurements can be used to determine which conclusion is correct. If an HVAC effect continues to be detected (e.g., additional jumps in pressure are detected), the first conclusion may be made-e.g., the mobile device entered a vehicle with strong HVAC effect. If any detected movement of the mobile device (e.g., via an inertial sensor or a series of estimated positions) meets or exceeds an amount of movement that is only possible in a vehicle, the first conclusion may be made-e.g., the mobile device entered a vehicle with strong HVAC effect. If no HVAC effect continues to be detected, and if any detected movement of the mobile device does not meet or exceed an amount of movement that is only possible in a vehicle, then the second conclusion may be made-e.g., the mobile device is outside.

The first approach described above may be carried out using different mobile devices or the same mobile device during different periods of time, and data characterizing an environment's HVAC system can be collected and associated with the type of environment that is detected (e.g., a particular building, a vehicle used by a user). A crowd-sourced approach where data is collected by different mobile devices can be used to characterize an environment's HVAC system. With enough users across a variety of times, a building's HVAC system could be characterized, and the characterization can be used to determine the HVAC properties of the building, such as magnitudes of HVAC push/pull, frequencies of HVAC push/pull, and durations of HVAC push/pull of the building during particular time periods. An HVAC system of a vehicle used by a user (e.g., a car, a bus, a train, or other vehicle) can also be characterized, and the characterization can be used to determine the HVAC properties of the vehicle, such as magnitudes of HVAC push/pull, frequencies of HVAC push/pull, and durations of HVAC push/pull of the vehicle during particular time periods. Data on a user's motion can also be correlated to determine a user's preference in HVAC usage.

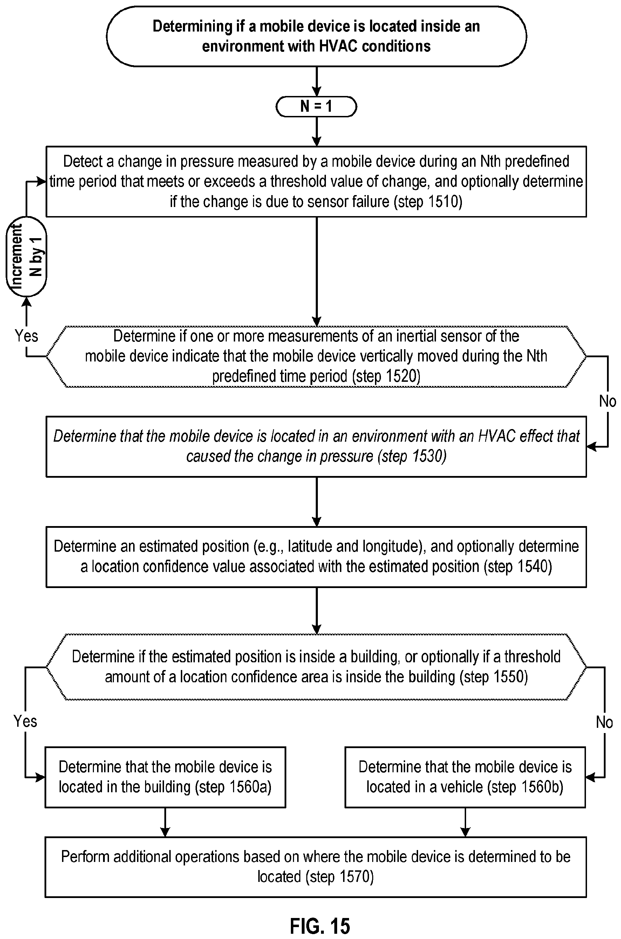

A second approach for detecting an HVAC effect is shown in **FIG. 15,** which depicts a process for determining whether a mobile device is inside an environment experiencing adverse pressure variation conditions, and then determining a particular environment in which the mobile is believed to be located.

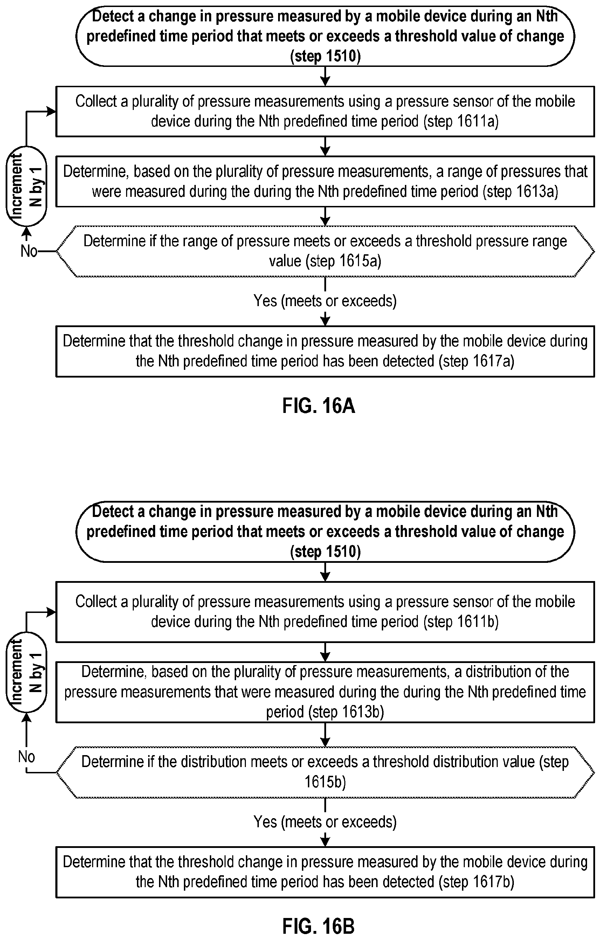

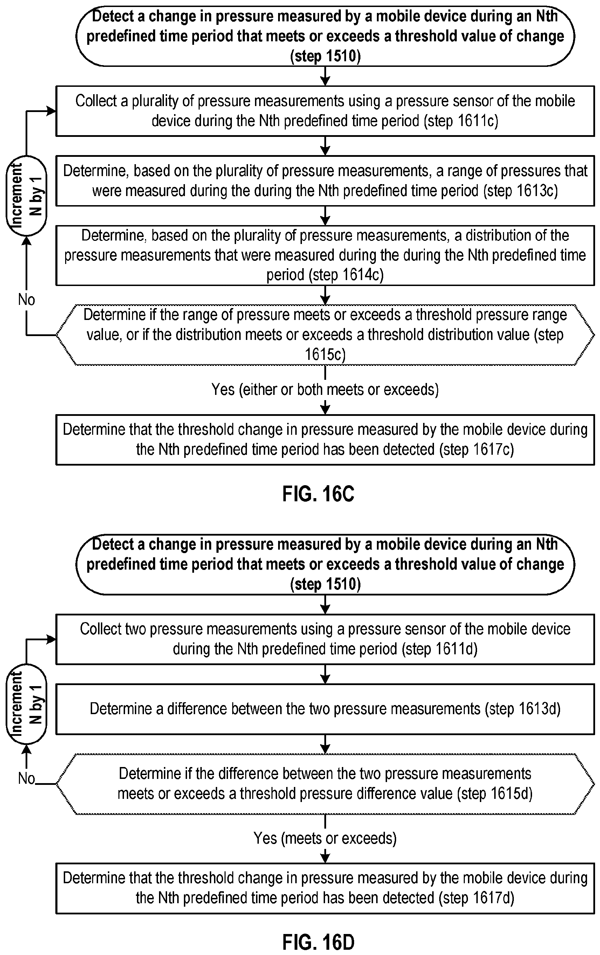

As shown in **FIG. 15,** a change in pressure measured by a mobile device during an Nth predefined time period that meets or exceeds a threshold value of change is detected during step 1510. Different embodiments of step 1510 are discussed later with reference to **FIG. 16A, FIG. 16B, FIG. 16C,** and **FIG. 16D.** The predefined time periods can be set to any length of time (e.g., 60 seconds or less, an amount of time during which two consecutive measurements of pressure are made by a pressure sensor of the mobile device, up to about 15 minutes where atmospheric pressure variation is about 10-20 Pa in change over a 15-minute period during the middle of the day). If the length of time between measurements is too long (e.g., one or more hours in some embodiments), part of a detected pressure change may be attributed to atmospheric pressure variation, not HVAC conditions. That part could be determined using outdoor pressure measurements, and then removed from analysis.

Optionally, during step 1510, a determination is made as to whether the change in measured pressure is due to failure of the pressure sensor. In one embodiment of step 1510 that optionally determines if the change in pressure measured by the mobile device is due to failure of the pressure sensor instead of HVAC conditions, the change in pressure is compared to a maximum threshold change in pressure that specifies an amount of pressure change that is not physically possible (e.g., a change of 100,000 Pa) in a specified period of time (e.g., a predefined number of seconds), and the change in pressure measured by the mobile device is determined to be due to sensor failure instead of HVAC conditions when the change in pressure exceeds the maximum threshold change. Alternatively, if a measurement of pressure or a series of pressure measurements are zero or not physically possible, then a determination may be made that the change in pressure measured by the mobile device is due to sensor failure instead of HVAC conditions.

During step 1520, after the change in pressure is detected, a determination is made as to whether measurement(s) of inertial sensor(s) of the mobile device indicate that the mobile device vertically moved during the Nth predefined time period. If the measurement(s) of the inertial sensor(s) do not indicate the mobile device vertically moved at all or in excess of a threshold vertical movement, the process proceeds to step 1530 discussed below. If the measurement(s) of the inertial sensor(s) indicate the mobile device vertically moved any distance or in excess of the threshold vertical movement, an assumption is made that the change in pressure is due to the mobile device changing altitudes during the vertical movement, and the process returns to step 1510. Examples of the threshold vertical movement include an amount of acceleration (e.g., 10 m/s$^2$), an amount of speed (e.g., 2 m/s), or an amount of distance (e.g., 3 meters or more). Alternatively, during step 1520, the change in measured pressure is used to determine an expected change in vertical distance, which is compared to an estimated amount of vertical movement indicated by the measurement(s) of the inertial sensor(s). The process returns to step 1510 if the expected change in vertical distance is within a threshold amount of distance from estimated amount of vertical movement. Otherwise, the process advances to step 1530. Examples of inertial sensors include accelerometers or other suitable sensors. If inertial information is unavailable, information about a building can be used to constrain vertical displacement of a mobile device-e.g., a query to a building database can retrieve the number of floors or height of the building, and if the building is short or only has 1 floor, it would likely indicate the user did not change floors.

During step 1530, a determination is made that the mobile device is located in an environment with an HVAC effect that caused the change in pressure.

During step 1540, an estimated position (e.g., latitude and longitude) is determined. Optionally, a location confidence value associated with the estimated position is determined. By way of example, the location confidence value may be defined as the expected error in an estimated position, which may be based upon individual errors feeding into the process used for determining the estimated position. For instance, the location confidence value is small for an estimated position determined using three or more distributed GNSS signals received by a mobile device with unobstructed views of the GNSS satellites from which the signals were received (i.e., the estimated position is considered to be highly-accurate). Alternatively, the location confidence value is larger for an estimated position determined using a GNSS signal received by a mobile device with an obstructed view of the GNSS satellite from which the signal was received (i.e., the estimated position is considered to have error due to that signal).

In different embodiments of step 1540, the estimated position is determined using known techniques of a GNSS network, a terrestrial transmitter network, a WiFi network, or other known approaches.

In one embodiment of step 1540, latitude and longitude are estimated at a point in time when the change in pressure is detected. Since the change in pressure is assumed to be caused by an HVAC effect of a building or vehicle, the estimated latitude and longitude determined at the time the change is detected serves to confirm that assumption. Estimated latitude and longitude determined before the change in pressure is detected can be used to further confirm an assumption that the detected change in pressure is caused by an HVAC effect of a building. For example, if a location confidence area based on an estimated latitude and longitude determined before the change in pressure is detected overlaps M% of a building, and another location confidence area based on an estimated latitude and longitude determined after the change in pressure is detected overlaps N% of the building, where N% is greater than M%, then it is highly likely the mobile device entered the building. In some embodiments, it is highly likely the mobile device entered the building only when N is much greater than Me.g., when the difference in overlap between N% and M% exceeds a threshold percentage like 50%. Other I/O/D techniques known in the art that could be used in place of or with this outlined technique of using the overlap of a building (e.g. GNSS signal strength, etc.).

During step 1550, a determination is made as to whether the estimated position is inside a building (or within a threshold amount of distance error from the building), or if a threshold amount of a location confidence area is inside the building. Examples of the threshold amount include 30%, 50%, 70% or more.

One example of a location confidence area includes a circular area centered at the estimated position with a radius equal to the location confidence value, or equal to the location confidence value multiplied by a scale factor. The location confidence area may alternatively have different shapes other than a circle, including a square with location confidence equal to half the side of the square. Other shapes are possible, including (ii) any polygon, (iii) an ellipsoid, (iv) a network area in which the mobile device received a signal from the network, or (v) others. By way of example, the scale factor may be a predefined number (e.g., a number greater than 1, or a number less than 1). In one embodiment, the scale factor S is determined *a priori* by determining, for one or a variety of location morphologies, estimated positions of the mobile device (or a representative model device of the mobile device) and location confidence values for the estimated positions when the mobile device or model thereof is at different surveyed locations (e.g., locations with known position coordinates) in the one type or a variety of location morphologies. Examples of location morphologies include dense urban, urban, suburban, and rural morphologies. For each estimated position and corresponding location confidence value, a determination is made as to whether the estimated position is within the corresponding location confidence value from the corresponding surveyed location at which the estimated position was determined. A percentage of times when the estimated positions are within their corresponding location confidence values from their corresponding surveyed locations is determined (e.g., 60%). A desired percentage is determined (e.g., 90%). A determination is made as to whether the determined percentage of times meets or exceeds the desired percentage. If not, the scale factor is determined to be a number that, when multiplied to each of the location confidence values results in a percentage of times (e.g., $\geq$ 90%) when the estimated positions are within a product of their corresponding location confidence values and the scale factor from their corresponding surveyed locations that meets or exceeds the desired percentage (90%). Once the scale factor is computed for the mobile device, or for a representative model of the mobile device, the scale factor is stored for later use. In one embodiment that uses a scale factor, a single scale factor is determined *a priori* for the mobile device. In another embodiment that uses a scale factor, different scale factors are determined *a priori* for different morphologies (e.g., a first scale factor for a first type of morphology, ..., and an nth scale factor for an nth type of morphology, for different types of morphologies like dense urban, urban, suburban, rural, or other morphologies).

If the result of step 1550 is yes, the mobile device is determined to be located in the building (step 1560a). If the result of step 1550 is no, the mobile device is determined to be located in a vehicle (step 1560b), such as a car, bus, train or other vehicle.

In one embodiment, the determination of step 1550 effectively determines a level of confidence in whether the mobile device is inside a building, which permits the estimated position to be located within an amount of tolerated error from the building even if the estimated position is located outside the building. If the confidence is low (e.g., if the estimated position is not inside the building, if the estimated position is not within an amount of tolerated error from the building, or if the amount of a location confidence area overlapping the building is not more than a threshold amount), then the default determination is that the mobile device is more likely to be in a vehicle near the building than in the building. If a mobile device enters a vehicle parked next to a building, and the confidence that the mobile device is in the building is high (e.g., if the estimated position is inside the building, if the estimated position is within an amount of tolerated error from the building, or if the amount of a location confidence area overlapping the building is more than a threshold amount), a determination that the mobile device is in the building may be later modified to a determination that the mobile device was in a vehicle once additional estimated positions of the mobile device indicate the vehicle is moving away from the building, or once measurements from an inertial sensor indicate movement akin to vehicle movement. As an extreme example, if subsequent estimated positions of the mobile device or if inertial sensors of the mobile device indicate a pace of travel by the mobile device that is unlikely to be possible by a human walking, and is more likely to be caused by a moving vehicle, then the determination may be changed from the mobile device being in a building to being in a vehicle.

In one embodiment of **FIG. 15,** an optional step (not shown) may be performed before step 1560a is performed.

In the optional step, a determination is made if the mobile device has been moving at a speed or acceleration that is assumed to be not possible inside a building (e.g., a speed or acceleration exceeding a threshold walking speed or acceleration). If the mobile device has been moving at a speed or acceleration that is assumed to be not possible inside a building, then step 1560a is not performed, and instead step 1560b is performed (i.e., the determination is that the mobile device is located in a vehicle, not the building). Alternatively, this optional step may occur after step 1540, but before step 1550, and the result would be proceeding to step 1560b without performing step 1550 if the mobile device has been moving at a speed or acceleration that is assumed to be not possible inside a building, and otherwise performing step 1550 if the mobile device has been moving at a speed or acceleration that is assumed to be possible inside a building.

In optional step 1570, additional operations are performed based on where the mobile device is determined to be located. Examples of additional operations during step 1570 include using knowledge of the mobile device's location as being inside a building or inside a vehicle to: (i) identify information about the building (e.g, a map of the building, predetermined HVAC characteristics) or information about the vehicle (e.g., predetermined HVAC characteristics); (ii) determine when to calibrate a pressure sensor of the mobile device (e.g., when the mobile device is not inside the building or the vehicle, or when pressure measurements by the mobile device when the mobile device is inside the building or the vehicle can be adjusted to account for HVAC effect of the building or the vehicle); (iii) determine when to measure HVAC characteristics of the building (e.g., to collect data during a time period while the mobile device is inside the building for use in modifying stored HVAC characteristics of the building, for use in determining energy efficiency of the building's HVAC system, or other purposes); (iv) determine when the mobile device is outside a building, but inside a vehicle's environment that may be causing a measurement of pressure that does not accurately reflect pressure outside of the vehicle.

*Detecting a change in pressure measured by a mobile device that meets or exceeds a threshold value of change (step 1510)*

One embodiment of step 1510 is shown in **FIG. 16A,** which includes the steps of: collecting a plurality of pressure measurements using a pressure sensor of the mobile device during the Nth predefined time period (step 1611a); determining, based on the plurality of pressure measurements, a range of pressures that were measured during the Nth predefined time period (step 1613a); determining if the range of pressure meets or exceeds a threshold pressure range value (step 1615a); if the range of pressure meets or exceeds the threshold pressure range value, determining that the change in pressure measured by the mobile device during the Nth predefined time period meets or exceeds the threshold value of change (step 1617a); and if the range of pressure does not meet or exceed the threshold pressure range value, increment N by 1, and return to step 1611a. An example of a threshold pressure range value includes 20 Pa. One advantage of the process shown in **FIG. 16A** over other processes shown in other figures includes minimizing memory use and processing used for computations, where use of the process need only track and store a minimum pressure measurement and a maximum pressure measurement in addition to the timestamps of those measurements. Any new measurements need only be checked against the minimum pressure measurement and the maximum pressure measurement to determine if either should be replaced by the new measurement. As a result, only up to three sets of measurements need to be stored at a time (e.g., the minimum, maximum and current measurements).

Another embodiment of step 1510 is shown in **FIG. 16B,** which includes the steps of: collecting a plurality of pressure measurements using a pressure sensor of the mobile device during the Nth predefined time period (step 1611b); determining, based on the plurality of pressure measurements, a distribution (e.g., standard deviation) of the pressure measurements that were measured during the Nth predefined time period (e.g., 68%, 80%, 90%, or other) (step 1613b); determining if the distribution (e.g., standard deviation) meets or exceeds a threshold standard deviation value (step 1615b); if the distribution (e.g., standard deviation) meets or exceeds the threshold distribution (e.g., standard deviation) value, determining that the change in pressure measured by the mobile device during the Nth predefined time period meets or exceeds the threshold value of change (step 1617b); and if the distribution (e.g., standard deviation) does not meet or exceed the threshold pressure range value, increment N by 1, and return to step 1611b. An example of a threshold distribution (e.g., standard deviation) value includes 10 Pa. One advantage of the process shown in **FIG. 16B** over other processes shown in other figures includes being able to distinguish a sudden change in measured pressure from random fluctuations that could be attributed to sensor noise or atmospheric turbulence.

The process shown in **FIG. 16B** can be modified to use variance instead of standard deviation, where variance is the standard deviation, squared. One advantage of using variance includes simplified computation by not needing to apply a square root to the formula, since standard deviation requires once summing the differences between each value and the mean before dividing by the number of data points, which can be cumbersome for low-level firmware programming without some approximations (e.g., Taylor series).

Another embodiment of step 1510 is shown in **FIG. 16C,** which includes the steps of: collecting a plurality of pressure measurements using a pressure sensor of the mobile device during the Nth predefined time period (step 1611c); determining, based on the plurality of pressure measurements, a range of pressures that were measured during the Nth predefined time period (step 1613c); determining, based on the plurality of pressure measurements, a standard deviation of the pressure measurements that were measured during the Nth predefined time period (step 1614c); determining if the range of pressure meets or exceeds a threshold pressure range value, or if the standard deviation meets or exceeds a threshold standard deviation value (step 1615c); if the range of pressure meets or exceeds the threshold pressure range value, or if the standard deviation meets or exceeds the threshold standard deviation value, determining that the change in pressure measured by the mobile device during the Nth predefined time period meets or exceeds the threshold value of change (step 1617c); and if both the range of pressure does not meet or exceed the threshold pressure range value and the standard deviation does not meet or exceed the threshold standard deviation value, increment N by 1, and return to step 1611c. One advantage of the process shown in **FIG. 16C** over other processes shown in other figures includes having more ways of detecting a threshold change in pressure.

Yet another embodiment of step 1510 is shown in **FIG. 16D,** which includes the steps of: collecting two pressure measurements using a pressure sensor of the mobile device during the Nth predefined time period (step 1611d); determining a difference in pressure between the two pressure measurements (step 1613d); determining if the difference in pressure between the two pressure measurements meets or exceeds a threshold pressure difference value (step 1615d); if the difference in pressure meets or exceeds the threshold pressure difference value, determining that the change in pressure measured by the mobile device during the Nth predefined time period meets or exceeds the threshold value of change (step 1617d); and if the difference in pressure does not meet or exceed the threshold pressure range value, increment N by 1, and return to step 1611d. One advantage of the process shown in **FIG. 16D** over other processes shown in other figures includes reduced memory usage since only two pressure measurement values need to be stored.

By way of example, some embodiments of each of **FIG. 15, FIG. 16A, FIG. 16B, FIG. 16C** and **FIG. 16D** use a moving time window that checks for pressure changes after each new pressure measurement is added. These embodiments may also account for natural pressure variation by imposing a maximum time limit between consecutive pressure measurements that are considered in the range, standard deviation, or other tests-e.g., where only a series of two or more pressure measurements with separations between consecutive pressure measurements that all meet the requirement for the maximum time limit is considered in the range, standard deviation, or other computations. As a result, short term changes on the order of minutes are monitored.

By way of example, the processes of **FIG. 15, FIG. 16A, FIG. 16B, FIG. 16C** and **FIG. 16D** may be performed by one or more machines that include: processor(s) or other computing device(s) (e.g., at a mobile device and/or a server) for performing (e.g., that perform, or are configured, adapted or operable to perform) each step; data source(s) at which any data identified in the processes is stored for later access during the processes; and a pressure sensor of the mobile device.

*Determining when a mobile device is expected to be inside or outside a building*

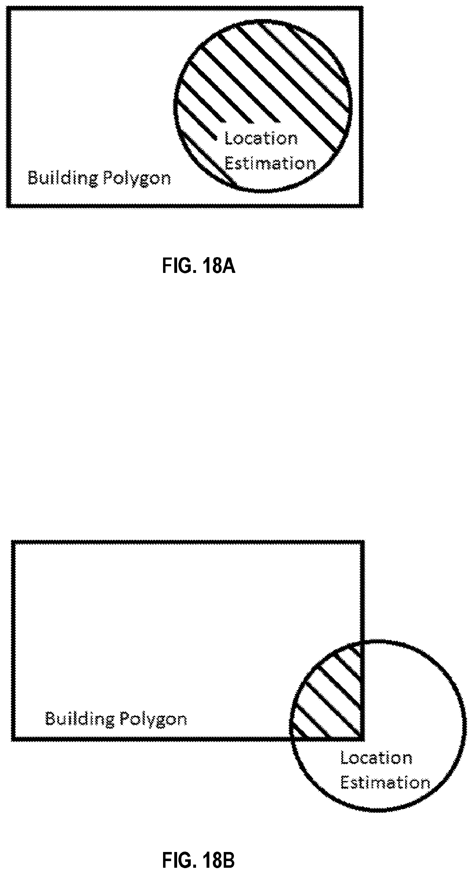

**FIG. 18A** and **FIG. 18B** illustrate an approach for determining when a mobile device is expected to be inside or outside a building. As shown in **FIG. 18A,** a location confidence area falls entirely within a building's polygon. This illustration represents circumstances when the overlap of the polygon and the location confidence area (e.g., 100%) is above a threshold amount of overlap (e.g., 50%), and a conclusion is made that the mobile device is inside the building with high confidence. As shown in **FIG. 18B,** a location confidence area falls partially within the building's polygon. This illustration represents circumstances when the overlap of the polygon and the location confidence area (e.g., 30%) is below the threshold amount of overlap (e.g., 50%), and a conclusion is made that the mobile device is either (i) not inside the building or (ii) inside the building with low confidence given that the overlap of the polygon and the location confidence area is below the threshold amount of overlap.

*Determining when a mobile device is expected to be inside an environment with a recognizable pressure variation effect*

Approaches described herein that make determinations based on whether an HVAC effect is present in an environment can be used to make similar decisions based on whether other pressure variation effects (e.g., Venturi effect) are present, as detected from pressure profiles that are expected for the other pressure variation effects. For example, if a measured pressure profile has a particular noise profile (e.g., associated with a Venturi effect that can be generated by a moving vehicle), a determination can be made that the mobile device is in an environment where pressure measurements are unreliable (e.g., the mobile device is inside a moving vehicle).

*Comparison to other technologies*

A 2014 paper entitled Using Mobile Phone Barometer for Low-Power Transportation Context Detection, by Sankaran, Proceedings of the 12th ACM Conference on Embedded Network Sensor Systems, November 03-06, 2014, Memphis, Tennessee, illustrates a method of using a barometer to detect if a user is "still", "walking", or "driving".

Depending on the spread of the sensor measurements over short times, and the measure of the terrain, it appears to assign an appropriate context mode. Sample thresholds disclosed in the paper appear to include: if the barometer changes by more than 0.8 m in 5 seconds, the user is "driving"; if the peaks and valleys of a person's height profile is more than 1 peak per 200 s, the user is "driving"; if the user has a 0.3 m standard deviation over 200 seconds, the user is flagged as "walking"; otherwise, the user is "idle". The paper also describes a barometer/accelerometer fusion technique. By contrast the approaches described in this application can be used to determine a "building pressure variation effect" (HVAC) mode and a "vehicle pressure variation effect" (e.g., HVAC, Venturi) mode that can be used to constrain and improve location data from other location services for reverse geocoding, inside/outside detection, or dead reckoning.

*Technical Benefits*

Processes described herein improve the fields of calibration and location determination by determining when measured pressure conditions are indicative of circumstances during which estimating an altitude of a mobile device or calibrating a pressure sensor of the mobile device will be unsuitable without compensating for the pressure conditions in the estimation process or calibration process. The processes create new and useful data, including data that confirms whether circumstances are suitable for putting an estimated altitude or pressure measurement to use during calibration of a pressure sensor or estimation of a position of a mobile device. Prior approaches that do not produce this data prior to calibration or position determination are more likely to calibrate or estimate positions with less or even unacceptable accuracy. Even under conditions where an estimated altitude is not computed when a mobile device is determined to be inside a building, the processes described herein that detect when the mobile device is inside the building advantageously provide information that has many uses (e.g., to identify a map of the building, to trigger collection of information about the building, to resolve possible locations of the mobile device to only locations that are inside a building, or another use).

**Determining when to calibrate a pressure sensor of a mobile device**

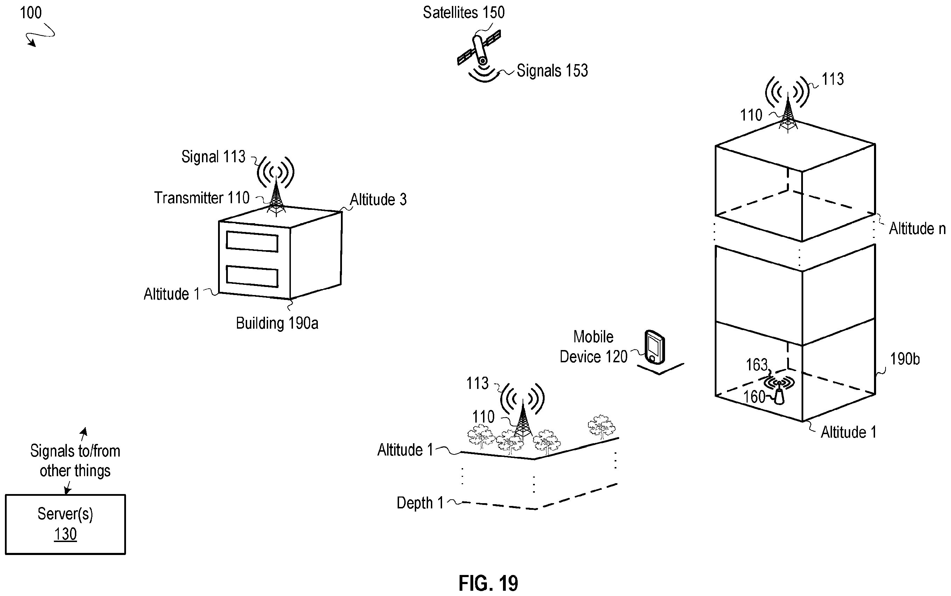

Systems and methods for determining when to calibrate a pressure sensor of a mobile device are described below. Attention is initially drawn to an operational environment 100 illustrated in **FIG. 19,** which includes a network of terrestrial transmitters 110 and at least one mobile device 120. Each of the transmitters 110 and the mobile device 120 may be located at different altitudes or depths that are inside or outside various natural or manmade structures (e.g. buildings) 190. Positioning signals 113 and 153 are sent to the mobile device 120 from the transmitters 110 and satellites 150, respectively, using known wireless or wired transmission technologies. The transmitters 110 may transmit the signals 113 using one or more common multiplexing parameters-e.g. time slot, pseudorandom sequence, frequency offset, or other. The mobile device 120 may take different forms, including a mobile phone, a tablet, a laptop, a tracking tag, a receiver, or another suitable device that can receive the positioning signals 113 and/or 153, and that has a pressure sensor for determining a measurement of pressure at a location of the mobile device 120. The mobile device 120 usually includes a temperature sensor where a temperature of the pressure sensor or a battery is measured, which can roughly represent an internal temperature of the mobile device 120. Each of the transmitters 110 may also include a pressure sensor and a temperature sensor that respectively measure pressure and temperature at the location of that transmitter 110. Measurements of pressure and temperature can be used to compute an estimated altitude of the mobile device 120 using Equation 1, which is described in the Background section.

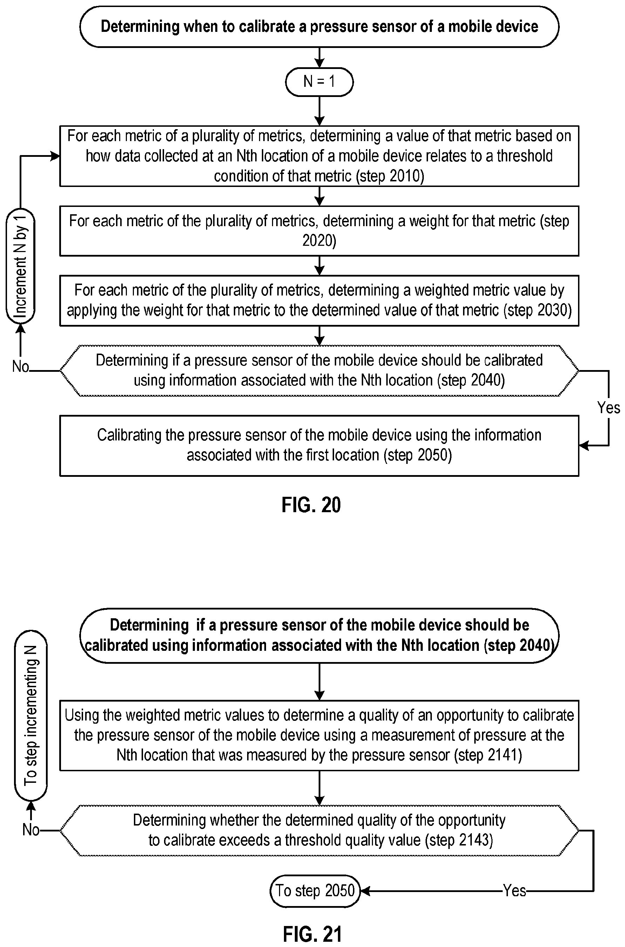

The pressure sensor of the mobile device 120 cannot be calibrated at every location of the mobile device in the operational environment 100. For example, if the mobile device 120 entered a building with an HVAC system that generates a localized pressure that does not align with outdoor pressure for the same altitude (e.g., the indoor pressure has been pushed or pulled by the HVAC system), future measurements of pressure by the pressure sensor while the mobile device 120 is inside the building may not be usable for calibration. If the exact position of the mobile device 120 is not known, and the possible positions of the mobile device 120 are distributed throughout an area that has significant altitude variation (e.g., greater than 2 meters), then calibration may not be possible where true altitude of the mobile device 120 is uncertain. If the temperature inside the mobile device 120 when at a particular location is high enough to distort pressure measurements from the pressure sensor, calibration may not be possible without introducing unacceptable error. Thus, solutions are needed for determining when a pressure sensor should or should not be calibrated. One approach for determining when to calibrate a pressure sensor of a mobile device is provided below with reference to **FIG. 20.**

A process for determining when to calibrate a pressure sensor of a mobile device is shown in **FIG. 20.** As shown, for each metric of a plurality of metrics, a value of that metric is determined based on how data collected at an Nth location of the mobile device relates to a threshold condition of that metric (step 2010). By way of example, the Nth location may be a specific position at which the mobile device is located (e.g., a surveyed point), or an area in which the true position of the mobile device is located. Examples of metrics, values of metrics, collected data, and threshold conditions are described later under the *'Metrics'* section.

For each metric of the plurality of metrics, a weight for that metric is determined (step 2020). The weights may be the same for each metric, or may be different depending on desired implementation.

For each metric of the plurality of metrics, a weighted metric value is determined by applying the weight for that metric to the determined value of that metric (step 2030). In one embodiment of step 2030, the weighted metric is determined by multiplying the determined metric value and the weight.

Resultant weighted metric values are used to determine if a pressure sensor of the mobile device should be calibrated using information associated with the Nth location (step 2040). Example methods for calibrating a pressure sensor of a mobile device are provided later in the *'Calibration'* section. By way of example, the information associated with the $N$th location may include: (i) a measurement of pressure at the $N$th location that was measured by the pressure sensor; and (ii) an altitude value representing the true altitude of the $N$th location. Examples of the altitude value representing the true altitude of a location include a known altitude of a specific position or a flat area, or a representative altitude of a non-flat area. Examples of a representative altitude value include: (i) a mean value of a plurality of altitude values in an area of possible positions of the mobile device (e.g., where an initial position estimate for the mobile device has error); (ii) a median value of the plurality of altitude values; (iii) the altitude value of a section at the center of the area in which the mobile device is known to reside; (iv) the most-common altitude value of the plurality of altitude values; (v) an interpolated altitude among centers of sections in the area; (vi) an interpolated altitude among centers of tiles neighboring an initial estimate of the mobile device's position; or (vii) any of the above examples, but with a smoothing filter applied. Each of these representative altitude values provide different advantages, as one of ordinary skill in the art would recognize. In nearly all cases, a mobile device is located at some height above terrain level during normal use-e.g., most of the time at the hip level of a user (e.g., in a pocket or bag), or on a table. An expected height of a mobile device above terrain can be accounted for during calibration (e.g., by adding the expected height above terrain to the values of (i) through (vii), where the expected height is typically around 0.75 to 1.0 meters.

If a determination is made that the pressure sensor of the mobile device should be calibrated using the information associated with the Nth location, the pressure sensor of the mobile device is calibrated using the information associated with the Nth location (step 2050).

If a determination is made that the pressure sensor of the mobile device should not be calibrated using information associated with the Nth location, the information associated with the Nth location is not used to calibrate the pressure sensor. Instead, the mobile device eventually moves to a new location, and the process of **FIG. 20** is repeated for the new location. Alternatively, conditions can change so that circumstances are now more advantageous for calibration. For example, if in a subsequent fix the location confidence reduces (e.g., from 100 m down to 10 m) owing to an improved position fix, which reduces the flatness metric and places the user outside, then the determination is made that the pressure sensor of the mobile device should be calibrated.

One embodiment of step 2040 is depicted in **FIG. 21.** As shown, the weighted metric values are used to determine a quality of an opportunity to calibrate the pressure sensor using a measurement of pressure at the Nth location that was measured by the pressure sensor (step 2141), and a determination is made as to whether the determined quality of the opportunity to calibrate exceeds a threshold quality value (step 2143). The formula below illustrates one embodiment of step 2141:

$$C = \frac{w_1 V_1 + \cdots + w_n V_n}{w_1 + \cdots + w_n} \; (Equation \; 8),$$

where $V_1$ though $V_n$ are metric values, $w_1$ though $w_n$ are corresponding weights applied to the metric values, and C represents the quality of the opportunity to calibrate the pressure sensor using the information associated with the $N$th location. In step 2143, a threshold quality value $C_{threshold}$ is compared to $C$ to determine if $C \geq C_{threshold}$. If $C \geq C_{threshold}$, then the pressure sensor of the mobile device is calibrated using the information associated with the $N$th location (e.g., during step 2050). If $C < C_{threshoLd}$, then the pressure sensor of the mobile device is not calibrated using the information associated with the Nth location.

*Metrics*

Different metrics, metric values, collected data, and threshold conditions are contemplated, as described below.

In different embodiments, any combination of different metrics listed below are used:

(i) Flatness metric (e.g., whether altitude(s) of the location meet a threshold altitude variation condition);
(ii) Pressure variation effect metric (e.g., whether the location is likely to be in a building or vehicle in which an HVAC effect or stack/chimney effect is present, or in a vehicle in which another pressure variation condition is present like a Venturi effect, where the pressure variation effect can impact the accuracy of a pressure measurement by the pressure sensor);

(iii) Building overlap metric (e.g., whether the location is likely to be outside at a known ground altitude or within a range of ground altitudes, and not inside a building at an unknown floor or affected by an indoor pressure variation effect that impacts accuracy of any pressure measurement, altitude measurement or calibration);

(iv) Indoor-outdoor signal strength detection metric (e.g., whether measured satellite signal strengths for signals from different satellites are above a threshold strength value that indicates the location is likely to be outside at a known ground altitude or within a range of ground altitudes, and not inside a building at an unknown floor or affected by an indoor pressure variation effect that impacts accuracy of any pressure measurement, altitude measurement or calibration);

(v) Indoor-outdoor altitude detection metric (e.g., whether an estimated altitude is above a threshold altitude that indicates the location is likely to be inside a building and not at a known ground altitude or within a range of ground altitudes; or e.g., whether an estimated altitude is below a threshold altitude that indicates the location is likely to be outside at a known ground altitude or within a range of altitudes, and not inside a building at an unknown floor or affected by an indoor pressure variation effect that impacts accuracy of any pressure measurement, altitude measurement or calibration);

(vi) Internal temperature metric (e.g., whether the internal temperature of the mobile device, such as a battery temperature retrieved from an API, is at a level of temperature that can impact the accuracy of a pressure measurement by the pressure sensor, which is sensitive to localized temperature that can produce up to 1 meter or more of altitude error);

(vii) Movement mode metric (e.g., whether a type of movement of the mobile device is conducive or not conducive for calibrating the pressure sensor, such as a driving mode that indicates a high likelihood a pressure variation effect exists that can impact the accuracy of a pressure measurement by the pressure sensor, which is different than a walking mode or a nonmovement mode that reduce the likelihood that pressure variation effect exists; in some embodiments, subsequent types of movements can be correlated to look for transitions from one type to another, as certain transitions can more likely indicate better calibration opportunity, such as transitioning from being in a moving vehicle to being still, which likely indicates the vehicle has parked or is otherwise stopped at a location with a discernable altitude that offers a good opportunity to calibrate); and

(viii) Time since last calibration metric (e.g., whether a threshold amount of time has passed since the pressure sensor was last calibrated according to calibration records stored on the mobile device or a location remote from the mobile device, where a time exceeding the threshold amount of time indicates a need for calibration).

For each of the above metrics, examples of how a value of the metric is determined (e.g., during step 2010) based on collected data and threshold conditions are provided below:

(i) Flatness metric - One process for determining the value of a flatness metric comprises: determining if a predefined percentage of the altitudes in an area of possible positions of the mobile device are within a first predefined distance of each other or within a second predefined distance of a determined altitude value (e.g., a mean or median of the altitudes within the area or a specific latitude and longitude at the center of an area of possible positions of a mobile device), where the first and second predefined distances may be the same or different, and defining the metric value based on the result of the determination. By way of example, a first value of the metric when the predefined percentage of the altitudes in the area are within the first predefined distance from each other or within the second predefined distance from the determined altitude value within the area is higher than a second value of the metric when the opposite is true. The flatness metric represents how accurate a calibration result may be when the true altitude of the mobile device is unknown, since having less variation in possible altitudes of true position of the mobile device reduces error in a calibration result, a pressure measurement, or an altitude measurement. By way of example, altitudes in an area can be obtained from a data source (e.g., an accessible data source of ground-level altitudes or building floor altitudes that are inside the area), where the area may be identified in different ways (e.g., the area includes a ground level area and/or building floors that are within a predefined distance from an initial estimate of the mobile device's position, where the initial estimate of the position includes estimated latitude and longitude and the predefined distance is a possible amount of error in the estimated position or another predefined distance; e.g., the area includes a defined area that includes a beacon connected to the mobile device).

(ii) Pressure variation effect metric - One process for determining the value of a pressure variation effect metric comprises: determining if a predefined percentage of pressure measurements from the pressure sensor during a predefined time period are within a first predefined amount of pressure from each other or within a second predefined amount of pressure from a determined pressure value (e.g., a mean or median of the pressure measurements) where the first and second predefined amounts of pressure may be the same or different, and defining the metric value based on the result of the determination. By way of example, a first value of the metric when the predefined percentage of the pressure measurements are within the first predefined amount of pressure from each other or within the second predefined amount of pressure from the determined pressure value pressure measurements is higher than a second value of the metric when the opposite is true. In an alternative process, determining the value of a pressure variation effect metric comprises: determining if a standard deviation of the pressure measurements is within a threshold standard deviation value, and defining the metric value based on the result of the determination, where a first value of the metric when the standard deviation of the pressure measurements is within the threshold standard deviation value is higher than a second value of the metric when the opposite is true. In an alternative process, determining the value of a pressure variation effect metric comprises: determining if any change in pressure during the predefined period of time exceeds a predefined amount of pressure change (e.g., a maximum amount of possible, naturally-occurring pressure change for the predefined period of time), and defining the metric value based on the result of the determination, where a first value of the metric when any change in pressure during the predefined period of time exceeds the predefined amount of pressure change is lower than a second value of the metric when the opposite is true. The pressure variation effect metric represents how accurate a calibration result may be depending on the possible existence of pressure variations that are not aligned with natural pressure variation and that may be due to HVAC effect, Venturi effect, stack/chimney effect, or other localized pressure variation effects. If detected pressure variation exceeds the boundaries of expected natural pressure variation, then the value of this metric indicates calibration should not occur using the information associated with the *N*th location.

(iii) Building overlap metric - One process for determining the value of a building overlap metric comprises: determining a percentage of the *N*th location (e.g., when the *N*th location is an area of possible positions of the mobile device) that overlaps with an area occupied by a building (e.g., a building's footprint or polygon determined from a map or other data source), and defining the metric value based on the percentage. By way of example, the value of the metric is inversely proportional to the percentage (i.e., the higher the overlap, the lower the metric value). Another process for determining the value of a building overlap metric comprises: determining distances between the Nth location and one or more nearby buildings, determining if the smallest distance exceeds a threshold amount of distance, and defining the metric value based on the result of the determination, where a first value of the metric when the smallest distance exceeds the threshold amount of distance is higher than a second value of the metric when the smallest distance does not exceed the threshold amount of distance. The building overlap metric is useful in determining if the Nth location is not likely to be inside a building. Knowing if the mobile device is not likely to be inside a building (e.g., is likely to be outside) permits use of known outdoor altitudes, which reduces possible calibration error. In some situations, knowing that the mobile device is inside a building but on the ground floor of that building offers opportunities for calibration. Also, knowing if the mobile device is not likely to be inside a building increases confidence that a measurement of pressure by the pressure sensor is not impacted by an unnatural pressure variation effect produced by a building.

(iv) Indoor-outdoor signal strength detection metric - One process for determining the value of an indoor-outdoor signal strength detection metric comprises: determining if a measured strength of a signal received by the mobile device from a satellite exceeds a threshold signal strength value, and defining the metric value based on the result of the determination. By way of example, a first value of the metric when the measured signal strength exceeds the threshold signal strength value is higher than a second value of the metric when the measured signal strength does not exceed the threshold signal strength value. Another process for determining the value of an indoor-outdoor signal strength detection metric comprises: determining if measured strengths of signals received by the mobile device from a minimum number satellites each exceed a threshold signal strength value, and defining the metric value based on the result of the determination, where a first value of the metric when measured strengths of signals received from the minimum number satellites each exceeds the threshold signal strength value is higher than a second value of the metric when all of the measured strengths of signals received from the minimum number satellites do not exceed the threshold signal strength value. Another process for determining the value of an indoor-outdoor signal strength detection metric comprises: determining if a measured strength of a signal received by the mobile device from a beacon located inside a building exceeds a threshold signal strength value, and defining the metric value based on the result of the determination, where a first value of the metric when the measured signal strength exceeds the threshold signal strength value (e.g., when the signal is assumed to have been received inside the building) is lower than a second value of the metric when the measured signal strength does not exceed the threshold signal strength value. The indoor-outdoor signal strength detection metric is useful in determining if the Nth location is not likely to be inside a building (e.g., when measured strengths of signals of satellites maintain a signal level that is common for outdoor reception of the signals) or when the Nth location is likely to be inside a building (e.g., when measured strengths of signals of indoor beacons maintain a signal level that is common for indoor reception of the signals). The same benefits of knowing if the mobile device is not likely to be inside a building described above for the building overlap metric apply to the indoor-outdoor signal strength detection metric.

(v) Indoor-outdoor altitude detection metric - One process for determining the value of an indoor-outdoor altitude detection metric comprises: determining if a difference between an estimated altitude of the *N*th location and an outdoor altitude (e.g., retrieved from a data source of ground-level outdoor altitudes) exceeds a threshold amount of altitude, and defining the metric value based on the result of the determination. By way of example, a first value of the metric when the difference exceeds the threshold amount of altitude is lower than a second value of the metric when the difference does not exceed the threshold amount of altitude. The indoor-outdoor altitude detection metric is useful in determining if the Nth location is likely to be inside a building (e.g., when the difference between an estimated altitude and an outdoor altitude exceeds a possible altitude error value, such that the Nth location is likely to be inside a building). Knowing if the mobile device is likely to be inside a building (e.g., is not likely to be outside) makes use of known outdoor altitudes for calibration less reliable even when an indoor altitude is unknown, which increases possible calibration error from using the outdoor altitude. Also, knowing if the mobile device is likely to be inside a building recognizes the risk that a measurement of pressure by the pressure sensor could be impacted by an unnatural pressure variation effect often produced by buildings.

(vi) Internal temperature metric - One process for determining the value of an internal temperature metric comprises: determining if a battery temperature of the mobile device when at the Nth location exceeds a threshold temperature value, and defining the metric value based on the result of the determination. By way of example, a first value of the metric when the battery temperature exceeds the threshold temperature value is lower than a second value of the metric when the battery temperature does not exceed the threshold temperature value. Measurements of pressure that are measured by a pressure sensor of a mobile device can be affected by the internal temperature of the mobile device, and error in an altitude computation due to the internal temperature can exceed a tolerated amount of error (e.g., 1 meter or more). Thus, it is helpful to identify circumstances when the measurement of pressure at the Nth location that was measured by the pressure sensor of the mobile device may be affected by the internal temperature of the mobile device. By way of example, battery temperature may be measured using a temperature sensor of the mobile device.

(vii) Movement mode metric - One process for determining the value of a movement mode metric comprises: determining a mode (e.g., not moving, moving at a walking speed, moving with a vehicle, or unknown, as retrieved from an API), and defining the metric value based on the result of the determination. By way of example, a first value of the metric when the mode indicates the mobile device is not moving is higher than a second value of the metric when the mode indicates movement of the mobile device does not exceed a predefined walking speed, which is higher than a third value of the metric when the mode indicates movement of the mobile device is expected to be within a vehicle or when the mode is unknown. This metric represents a likelihood that the mobile device is not inside a moving vehicle. Since pressure variation inside moving vehicles can result in unreliable pressure measurements from the pressure sensor (e.g., due to the Venturi effect, HVAC, or a combination of the two), knowing if the mobile device is not likely to be in a moving vehicle increases confidence that calibration should occur using information associated with the Nth location. Determination of a movement mode can come from different sources, including inertial sensor measurements, a navigation application, or detecting a measured pressure profile that is due to vehicle movement. Also, in some embodiments, a determination is made that the mobile device has transitioned between different movement modes, which allows for correlating the movement as an indicator that the current mode provides for high confidence that the mobile device is in an optimal situation for sensor calibration- e.g., Driving/In Moving Vehicle mode followed by Still/Stationary mode likely indicates that a user parked his/her car and is likely to be at ground level and not likely to be in an upper floor of a building.

(viii) Time since last calibration metric - One process for determining the value of a time since last calibration metric comprises: determining a time since a last calibration of the pressure sensor (e.g., determined from a stored calibration history, which may include a time stamp of the last calibration, which can be compared to a current time of a clock), and defining the metric value based on the result of the determination. By way of example, a first value of the metric when the time exceeds a threshold amount of time is higher than a second value of the metric when the time does not exceed the threshold amount. This metric represents how likely drift has exceeded a tolerated amount of drift, since more drift typically occurs as more time passes since the previous calibration.

Different types of metric values are contemplated, including: a binary value (e.g., threshold is met = 1, threshold is not met = 0), a linear value (e.g., highest threshold is met = 1, highest threshold is not met, but lowest threshold is met = 0.5, lowest threshold is not met = 0), or some other pre-defined set of values. Examples of possible values for different metrics are provided below:

(i) Flatness metric example values:

a. when at least $P\%$ of altitudes are within $m$ meters from each other or a mean of the altitudes (e.g., value = 1; otherwise value = 0), where $P$ and $m$ may be predefined numbers (e.g., 80% and 1 meter, respectively);
b. when at least $P_1\%$ of altitudes are within $m$ meters from each other or a mean of the altitudes (e.g., value = 1.0), when less than $P_1\%$ but at least $P_2\%$ of altitudes are within $m$ meters from each other or a mean of the altitudes (e.g., value = 0.5), when less than $P_2\%$ of altitudes are within $m$ meters from each other or a mean of the altitudes (e.g., value = 0.0), where $P_1$, $P_2$ and $m$ may be predefined numbers (e.g., 80%, 60% and 1 meter, respectively); or

c. when at least $P\%$ of altitudes are within $m_1$ meters from each other or a mean of the altitudes (e.g., value = 1.0), when at least $P\%$ of altitudes are not within $m_1$ meters, but are within $m_2$ meters from each other or a mean of the altitudes (e.g., value = 0.5), when at least $P\%$ of altitudes are not within $m_2$ meters from each other or a mean of the altitudes (e.g., value = 0.0), where $P$, $m_1$, and $m_2$ may be predefined numbers (e.g., 80%, 1 meter and 2 meters, respectively).

d. Note: a mean was used in the examples above; however, in other embodiments, a median or other value-of-interest can be used instead of a mean.

(ii) Pressure variation effect metric example values:

a. over a time period $T$, when at least $P\%$ pressure measurements are within $p$ Pa of each other or a mean of the pressure measurements (e.g., value = 1; otherwise value = 0), where $T$, $P$ and $p$ may be predefined numbers (e.g., 1 minute, 80% and 10 Pa, respectively);

b. over a time period $T$, when at least $P_1\%$ of pressure measurements are within $p$ Pa of each other or a mean of the pressure measurements (e.g., value = 1.0), when less than $P_1\%$ but at least $P_2\%$ of pressure measurements are within $p$ Pa of each other or a mean of the pressure measurements (e.g., value = 0.5), when less than $P_2\%$ of pressure measurements are within $p$ Pa of each other or a mean of the pressure measurements (e.g., value = 0.0), where $T$, $P_1$, $P_2$ and $p$ may be predefined numbers (e.g., 1 minute, 90%, 75%, and 10 Pa, respectively); or

c. over a time period $T$, when at least $P\%$ of pressure measurements are within $p_1$ Pa of each other or a mean of the pressure measurements (e.g., value = 1.0), when $P\%$ of pressure measurements are not within $p_1$ Pa of each other or a mean of the pressure measurements, but are within $p_2$ Pa of each other or a mean of the pressure measurements (e.g., value = 0.5), when $P\%$ of pressure measurements are not within $p_2$ Pa of each other or a mean of the pressure measurements (e.g., value = 0.0), where $T$, $p_1$, $p_2$ and $P$ may be predefined numbers (e.g., 1 minute, 10 Pa, 20 Pa, and 90%, respectively).

d. Note: a mean was used in the examples above; however, in other embodiments, a median or other value-of-interest can be used instead of a mean.

(iii) Building overlap metric example values:

a. when $P\%$ of an area of possible positions of the mobile device overlaps with a building (e.g., value = [100-$P$]/100);

b. when at least $P\%$ of an area of possible positions of the mobile device does not overlap with a building (e.g., value = 1; otherwise value = 0), where $P$ may be a predefined number (e.g., 50%); or

c. when at least $P_1\%$ of an area of possible positions of the mobile device does not overlap with a building (e.g., value = 1.0), when less than $P_1\%$ but at least $P_2\%$ of an area of possible positions of the mobile device does not overlap with a building (e.g., value = 0.5), when less than $P_2\%$ of an area of possible positions of the mobile device does not overlap with a building (e.g., value = 0.0), where $P_1$ and $P_2$ may be a predefined number (e.g., 80% and 50%, respectively).

(iv) Indoor-outdoor signal strength detection metric example values:

a. when signals from at least $n$ satellites each have a signal strength of at least $S$ dB (e.g., value = 1; otherwise value = 0), where $n$ and $S$ may be predefined numbers (e.g., 4 satellites and 30 dB, respectively);

b. when all signals from at least $n_1$ satellites each have a signal strength of at least $S$ dB (e.g., value = 1.0), when all signals from at least $n_1$ satellites do not have a signal strength of at least $S$ dB, but all signals from $n_2$ (for $n_2$ less than $n_1$) satellites each have a signal strength of at least $S$ dB (e.g., value = 0.5), when all signals from $n_2$ satellites do not have a signal strength of at least $S$ dB (e.g., value = 0.0), where $n_1$, $n_2$ and $S$ may be predefined numbers (e.g., 4 satellites, 3 satellites, and 30 dB, respectively); or

c. when all signals from at least $n$ satellites each have a signal strength of at least $S_1$ dB (e.g., value = 1.0), when all signals from at least $n$ satellites do not have a signal strength of at least $S_1$ dB, but all signals from at least $n$ satellites each have a signal strength of at least $S_2$ (for $S_2$ less than $S_1$) dB (e.g., value = 0.5), when all signals from $n$ satellites do not have a signal strength of at least $S_2$ dB (e.g., value = 0.0), where $n$, $S_1$ and $S_2$ may be predefined numbers (e.g., 4 satellites, 30 dB, and 20 dB, respectively).

(v) Indoor-outdoor altitude detection metric example values: when an estimated altitude of the mobile device while at the $N$th location is greater than a predefined amount of altitude A from an altitude (e.g., ground-level) of an outdoor position that is within a threshold distance from an initial estimate of the mobile device's position (e.g., value = 0; otherwise value = 1), where A may be predefined (e.g., 5 meters); or when an estimated altitude of the mobile device while at the $N$th location is greater than or equal to a first predefined amount of altitude $A_1$ from an altitude of an outdoor position that is within a threshold distance from an initial estimate of the mobile device's position (e.g., value = 0), when the estimated altitude of the mobile device while at the $N$th location is less than the first predefined amount of altitude $A_1$, but greater than or equal to a second predefined amount of altitude $A_2$ from the altitude of the outdoor position (e.g., value = 0.5), and when the estimated altitude of the mobile device while at the Nth location is less than the second predefined amount of altitude $A_2$ from the altitude of the outdoor position (e.g., value = 1), where $A_1$ = 5 meters, and $A_2$ = 3 meters.

(vi) Internal temperature metric example values: when an internal temperature (e.g., a measured battery temperature or a measured temperature of the pressure sensor of the mobile device) is less than a predefined amount of temperature $T$ (e.g., value = 1; otherwise value = 0), where $T$ may be predefined (e.g., 35 degrees Celsius); or when the internal temperature is less than a first predefined amount of temperature $T_1$ (e.g., value = 1), when the internal temperature is greater than or equal to the first predefined amount of temperature $T_1$ and less than a second predefined amount of temperature $T_2$ (e.g., value = 0.5), and when the internal temperature is greater than or equal to the second predefined amount of temperature $T_2$ (e.g., value = 0.0), where $T_1$ and $T_2$ may be predefined (e.g., 30 and 35 degrees Celsius, respectively).

(vii) Movement mode metric example values: when no movement is detected (e.g., value = 1), when walking movement is detected (e.g., value = 1 or lower value greater than 0), when driving movement is detected (e.g., value = 0), when status of movement unknown (e.g., value = 0 or higher value less than 1).

(viii) Movement mode transition metric example values: if a user transitions from Driving to Still (e.g., value = 1). If a user transitions from Still to Walking (e.g. value = 0.5). If a user transitions from Still to Driving (e.g. value = 0.0).

(ix) Time since last calibration metric example values: when a time since last calibration is greater than a predefined amount of time $T$ (e.g., value = 1; otherwise value = 0), where $T$ may be predefined depending on the expected drift of the pressure sensor (e.g., 48 hours).

Different ways of using metric values are contemplated. For example, higher metric values can be used for circumstances that indicate the pressure sensor of the mobile device should be calibrated using information associated with the $N$th location, and lower metric values can be used for circumstances that indicate the pressure sensor of the mobile device should not be calibrated using information associated with the $N$th location. Alternatively, lower metric values can be used for circumstances that indicate the pressure sensor of the mobile device should be calibrated using information associated with the $N$th location, and higher metric values can be used for circumstances that indicate the pressure sensor of the mobile device should not be calibrated using information associated with the $N$th location.

The weights used to produce weighted values may be the same for each metric, or different depending on the metric. Some weights might be greater than others (e.g., the weight for the time since last calibration metric may be greater than weights for other metrics where the amount of drift is believed to exceed any amount of error introduced by other issues).

Weighted values can be combined in different ways to produce a value that represents how good of an opportunity an $N$th location provides for calibrating a pressure sensor of a mobile device. Example combinations include a weighted mean or other combinations. The produced value (e.g., a number between 0 and 1) may then be compared (e.g., as being greater than or less than) to a threshold value (e.g., a number between 0 and 1, such as 0.5) to determine if calibration should occur.

*Calibration*

One approach for calibrating a pressure sensor of a mobile device is described below. Initially, an estimated altitude $h_{mobile}$ is computed as:

$$h_{mobile} = h_{ref} \mp \frac{RT_{remote}}{gM} ln\left(\frac{P_{ref}}{P_{mobile}}\right) \ (Equation\ 9),$$

where $P_{mobile}$ is the estimate of pressure at the location of the mobile device, $P_{ref}$ is an estimate of pressure at a reference location, $T_{remote}$ is an estimate of ambient temperature (e.g., in Kelvin), $h_{ref}$ is the known altitude of the reference location, g corresponds to acceleration due to gravity, $R$ is a gas constant, and $M$ is molar mass of air (e.g., dry air or other). To calibrate the pressure sensor of the mobile device, the aim is to determine an adjustment to the value of $P_{mobile}$ such that $h_{mobile}$ is within a tolerated amount of distance from the true altitude of the mobile device, $h_{truth}$.

During calibration, a representative altitude value of the area in which the mobile device is expected to reside can be assigned as the true altitude of the mobile device, $h_{truth}$. Alternatively, the representative altitude value adjusted by a typical height at which the mobile device is likely to be held above the ground can be assigned as the true altitude of the mobile device, $h_{truth}$. Examples of representative altitude values are described earlier with respect to step 2040 of **FIG. 20.**

Once the true altitude of the mobile device, $h_{truth}$, is determined, a calibration value C needed to adjust the estimate of pressure at the location of the mobile device, $P_{mobile}$, is determined using the formula below:

$$h_{truth} = h_{ref} \mp \frac{RT}{gM} ln \left( \frac{P_{reference}}{P_{mobile}+C} \right) \text{ (Equation 10).}$$

Alternatively, differentiating pressure with respect to height can be used to help determine the calibration value C. The following relationship:

$$P_{at\ h_1} = P_{at\ h_2}\ exp \left( \frac{gM(h_2-h_1)}{RT} \right) \text{ (Equation 11),}$$

can be used to derive the following formula:

$$\frac{dP}{dh} = \frac{gMP}{RT} \approx 0.034 \frac{P}{T} \text{ (Equation 12).}$$

If a pressure measurement of by the mobile device is P = 101000 Pa and ambient temperature is T = 300 K, the formula of Equation 12 results in dP/dh ≈ 11.5 Pa/m. The values of P and T are reasonable assumptions for nominal weather, and the scale factor of 11.5 Pa/m can range between - 9-12 Pa/m if the weather gets cooler or hotter. This means for every meter adjustment to be made to get $h_{truth}$ to align with $h_{mobile}$ the calibration value C can be adjusted by 11.5 Pa. In this example, if $h_{mobile}$ = 12.0 m and $h_{truth}$ = 8m, the difference in altitude can be scaled by 11.5 Pa/m to get the difference in pressure, or C = 46 Pa as shown below:

$$C = \left( h_{truth} - h_{phone} \right) \times \frac{dP}{dh} = (12 - 8) \times 11.5 = 46 \text{ (Equation 13).}$$

*Technical Benefits*

Processes described herein improve the fields of sensor calibration and location determination by determining when circumstances permit effective calibration of a sensor that is necessary for accurate altitude determination. Prior approaches that do not detect undesirable circumstances for calibration are more likely to calibrate sensors or estimate positions with less or even unacceptable accuracy. By improving calibration of a pressure sensor of a mobile device, processes described herein provide for increased accuracy and reliability of estimated positions based on that improved calibration, which enables quicker emergency response times or otherwise improves the usefulness of estimated positions. Battery life of a mobile device is improved by selectively not performing calibration at a mobile device (and therefore not consuming battery life needed for calibration) during certain circumstances when other approaches would consume battery capacity by non-selectively calibrating the pressure sensor. Equipment that is susceptible to producing previously unusable data (e.g., a pressure sensor that produces pressure data with lower-than-desirable accuracy due to drift or inherent resolution of the equipment) is improved by providing for improved calibration of that previously unusable equipment and its data. The processes create new and useful data, such as data representing a quality of an opportunity to calibrate, which is indicative of when calibration of a pressure sensor should or should not occur. Prior approaches that do not produce this data prior to calibration or position determination are more likely to calibrate or estimate positions with less accuracy.

**Other Aspects**

Any method (also referred to as a "process" or an "approach") described or otherwise enabled by disclosure herein may be implemented by hardware components (e.g., machines), software modules (e.g., stored in machine-readable media), or a combination thereof. By way of example, machines may include one or more computing device(s), processor(s), controller(s), integrated circuit(s), chip(s), system(s) on a chip, server(s), programmable logic device(s), field programmable gate array(s), electronic device(s), special purpose circuitry, and/or other suitable device(s) described herein or otherwise known in the art. One or more non-transitory machine-readable media embodying program instructions that, when executed by one or more machines, cause the one or more machines to perform or implement operations comprising the steps of any of the methods described herein are contemplated herein. As used herein, machine-readable media includes all forms of machine-readable media (e.g. one or more non-volatile or volatile storage media, removable or non-removable media, integrated circuit media, magnetic storage media, optical storage media, or any other storage media, including RAM, ROM, and EEPROM) that may be patented under the laws of the jurisdiction in which this application is filed, but does not include machine-readable media that cannot be patented under the laws of the jurisdiction in which this application is filed. Systems that include one or more machines and one or more non-transitory machine-readable media are also contemplated herein. One or more machines that perform or implement, or are configured, operable or adapted to perform or implement operations comprising the steps of any methods described herein are also contemplated herein. Method steps described herein may be order independent and can be performed in parallel or in an order different from that described if possible to do so. Different method steps described herein can be combined to form any number of methods, as would be understood by one of ordinary skill in the art. Certain well-known structures and devices are not shown in figures to avoid obscuring the concepts of the present disclosure. Any known communication pathways and protocols may be used to transmit information (e.g., data, commands, signals, bits, symbols, chips, and the like) disclosed herein unless otherwise stated.

By way of example, the processes disclosed above may be performed by one or more machines that include: processor(s) or other computing device(s) (e.g., at a mobile device and/or a server) for performing (e.g., that perform, or are configured, adapted or operable to perform) each step; data source(s) at which any data identified in the processes is stored for later access during the processes; and particular machines for obtaining data used to determine metrics (e.g., signal processing components to determine signal strengths, a temperature sensor to measure temperatures, a pressure sensor to measure pressures, a clock to measure time, inertial sensors to measure movement, or other machines). Unless an alternative approach is described, access to data from a source of data may be achieved using known techniques (e.g., requesting component requests the data from the source via a query or other known approach, the source searches for and locates the data, and the source collects and transmits the data to the requesting component, or other known techniques). Methods described herein that use a mean can alternatively use a median or a value-of interest.

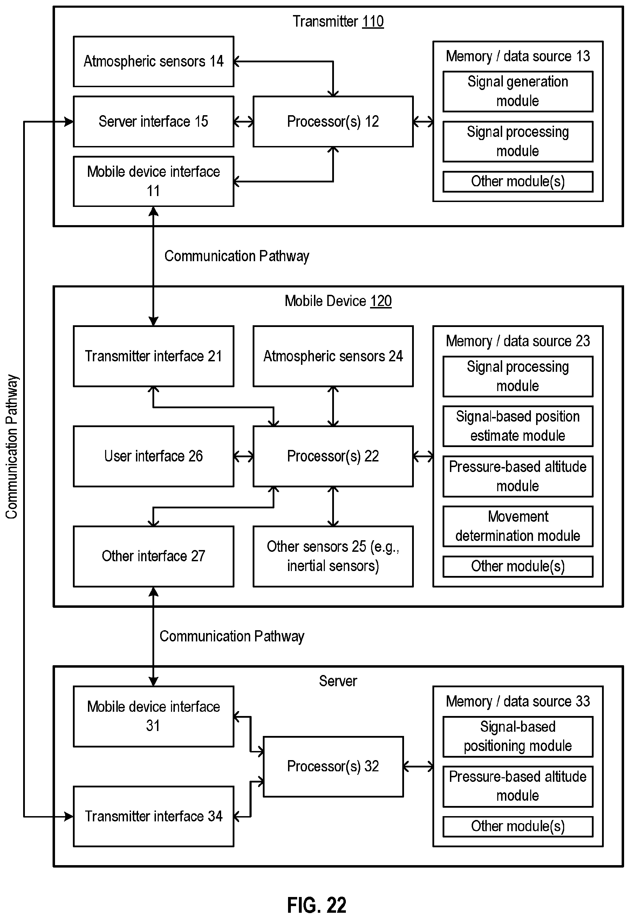

FIG. 22 illustrates components of a transmitter, a mobile device, and a server. Examples of communication pathways are shown by arrows between components.

By way of example in FIG. 22, each of the transmitters may include: a mobile device interface 11 for exchanging information with a mobile device (e.g., an antenna and RF front end components known in the art or otherwise disclosed herein); one or more processor(s) 12; memory/data source 13 for providing storage and retrieval of information and/or program instructions; atmospheric sensor(s) 14 for measuring environmental conditions (e.g., pressure, temperature, other) at or near the transmitter; a server interface 15 for exchanging information with a server (e.g., an antenna, a network interface, or other); and any other components known to one of ordinary skill in the art. The memory/data source 13 may include memory storing software modules with executable instructions, and the processor(s) 12 may perform different actions by executing the instructions from the modules, including: (i) performance of part or all of the methods as described herein or otherwise understood by one of skill in the art as being performable at the transmitter; (ii) generation of positioning signals for transmission using a selected time, frequency, code, and/or phase; (iii) processing of signaling received from the mobile device or other source; or (iv) other processing as required by operations described in this disclosure. Signals generated and transmitted by a transmitter may carry different information that, once determined by a mobile device or a server, may identify the following: the transmitter; the transmitter's position; environmental conditions at or near the transmitter; and/or other information known in the art. The atmospheric sensor(s) 14 may be integral with the transmitter, or separate from the transmitter and either co-located with the transmitter or located in the vicinity of the transmitter (e.g., within a threshold amount of distance).

By way of example FIG. 22, the mobile device may include: a transmitter interface 21 for exchanging information with a transmitter (e.g., an antenna and RF front end components known in the art or otherwise disclosed herein); one or more processor(s) 22; memory/data source 23 for providing storage and retrieval of information and/or program instructions; atmospheric sensor(s) 24 for measuring environmental conditions (e.g., pressure, temperature, other) at the mobile device; other sensor(s) 25 for measuring other conditions (e.g., inertial sensors for measuring movement and orientation); a user interface 26 (e.g., display, keyboard, microphone, speaker, other) for permitting a user to provide inputs and receive outputs; another interface 27 for exchanging information with the server or other devices external to the mobile device (e.g., an antenna, a network interface, or other); and any other components known to one of ordinary skill in the art. A GNSS interface and processing unit (not shown) are contemplated, which may be integrated with other components (e.g., the interface 21 and the processors 22) or a standalone antenna, RF front end, and processors dedicated to receiving and processing GNSS signaling. The memory/data source 23 may include memory storing software modules with executable instructions, and the processor(s) 22 may perform different actions by executing the instructions from the modules, including: (i) performance of part or all of the methods as described herein or otherwise understood by one of ordinary skill in the art as being performable at the mobile device; (ii) estimation of an altitude of the mobile device based on measurements of pressure form the mobile device and transmitter(s), temperature measurement(s) from the transmitter(s) or another source, and any other information needed for the computation); (iii) processing of received signals to determine position information (e.g., times of arrival or travel time of the signals, pseudoranges between the mobile device and transmitters, transmitter atmospheric conditions, transmitter and/or locations or other transmitter information); (iv) use of position information to compute an estimated position of the mobile device; (v) determination of movement based on measurements from inertial sensors of the mobile device; (vi) GNSS signal processing; or (vii) other processing as required by operations described in this disclosure.

By way of example **FIG. 22,** the server may include: a mobile device interface 21 for exchanging information with a mobile device (e.g., an antenna, a network interface, or other); one or more processor(s) 32; memory/data source 33 for providing storage and retrieval of information and/or program instructions; a transmitter interface 34 for exchanging information with a transmitter (e.g., an antenna, a network interface, or other); and any other components known to one of ordinary skill in the art. The memory/data source 33 may include memory storing software modules with executable instructions, and the processor(s) 32 may perform different actions by executing instructions from the modules, including: (i) performance of part or all of the methods as described herein or otherwise understood by one of ordinary skill in the art as being performable at the server; (ii) estimation of an altitude of the mobile device; (iii) computation of an estimated position of the mobile device; or (iv) other processing as required by operations described in this disclosure. Steps performed by servers as described herein may also be performed on other machines that are remote from a mobile device, including computers of enterprises or any other suitable machine.

Systems and methods disclosed herein may operate within a network of terrestrial transmitters or satellites. The transmitters may be located at different altitudes or depths that are inside or outside various natural or manmade structures (e.g. buildings). Positioning signals may be sent to the mobile device from the transmitters and/or satellites using known wireless or wired transmission technologies. The transmitters may transmit the signals using one or more common multiplexing parameters-e.g. time slot, pseudorandom sequence, frequency offset, or other. The mobile device may take different forms, including a mobile phone, a tablet, a laptop, a tracking tag, a receiver, or another suitable device that can receive the positioning signals. Certain aspects disclosed herein relate to estimating the positions of mobile devicese.g., where the position is represented in terms of: latitude, longitude, and/or altitude coordinates; x, y, and/or z coordinates; angular coordinates; or other representations. Positioning modules use various techniques to estimate the position of a mobile device can be used, including trilateration, which is the process of using geometry to estimate the position of a mobile device using distances traveled by different "positioning" (or "ranging") signals that are received by the mobile device from different beacons (e.g., terrestrial transmitters and/or satellites). If position information like the transmission time and reception time of a positioning signal from a beacon are known, then the difference between those times multiplied by speed of light would provide an estimate of the distance traveled by that positioning signal from that beacon to the mobile device. Different estimated distances corresponding to different positioning signals from different beacons can be used along with position information like the locations of those beacons to estimate the position of the mobile device. Positioning systems and methods that estimate a position of a mobile device (in terms of latitude, longitude and/or altitude) based on positioning signals from beacons (e.g., transmitters, and/or satellites) and/or atmospheric measurements are described in co-assigned U.S. Pat. No. 8,130,141, issued March 6, 2012, and U.S. Pat. Pub. No. 2012/0182180, published July 19, 2012. It is noted that the term "positioning system" may refer to satellite systems (e.g., Global Navigation Satellite Systems (GNSS) like GPS, GLONASS, Galileo, and Compass/Beidou), terrestrial transmitter systems, and hybrid satellite/terrestrial systems.

**Claims**

1. A method for determining when an estimated altitude of a mobile device can be used for calibration or location determination, the method comprising:

   determining an area in which the mobile device is expected to reside, the area comprising a plurality of sections, each section of the plurality of sections being a terrain tile;
   for each section of the plurality of sections in the area, determining an altitude value of that section;
   determining if a threshold percentage of the altitude values meets a threshold condition; and
   if the threshold percentage of altitude values meets the threshold condition, determining that the estimated altitude of the mobile device can be used for determining a position of the mobile device or for calibrating a pressure sensor of the mobile device, the estimated altitude of the mobile device being determined using a pressure measured by the pressure sensor of the mobile device.

2. The method of claim 1, wherein the method further comprises:
calibrating the pressure sensor of the mobile device using the estimated altitude and a representative altitude value for the area that is determined using the altitude values.

3. The method of claim 1, wherein the method further comprises:
determining if the estimated altitude is accurate by determining if the estimated altitude is within a threshold error value from a representative altitude value for the area.

4. The method of claim 1, wherein determining an area in which the mobile device is expected to reside comprises:

determining an initial estimate of a position of the mobile device; and
defining the area as including the initial estimate of the position of the mobile device and at least a threshold number of sections with known altitudes.

5. The method of claim 1, wherein determining an area in which the mobile device is expected to reside comprises:

determining an initial estimate of a position of the mobile device; and
defining the area as including the initial estimate of the position of the mobile device and no more than a threshold number of sections with known altitudes.

6. The method of claim 1, wherein determining an area in which the mobile device is expected to reside comprises:

determining that the mobile device resides in a network area that has defined boundaries; and
defining the area as the network area.

7. The method of claim 1, wherein determining an area in which the mobile device is expected to reside comprises:

determining an initial estimate of a position of the mobile device;
determining a location confidence value; and
defining the area using the initial estimate of the position of the mobile device and the location confidence value.

8. The method of claim 7, wherein defining the area comprises one of:

i) determining a circular area centered at the initial estimate of the position of the mobile device with a radius equal to the location confidence value; and
defining the area as the circular area;
ii) determining a circular area centered at the initial estimate of the position of the mobile device with a radius equal to a product of the location confidence value multiplied by a scale factor; and
defining the area as the circular area;
iii) determining a circular area centered at the initial estimate of the position of the mobile device with a radius equal to a product of the location confidence value multiplied by a scale factor;

determining if the circular area includes at least a threshold number of sections;
if the circular area includes at least the threshold number of sections, defining the area as the circular area; and
if the circular area does not include at least the threshold number of sections, determining a new circular area centered at the initial estimate of the position of the mobile device with a radius equal to a product of the location confidence value multiplied by another scale factor, and then repeating the step of determining if the circular area includes at least a threshold number of sections using the new circular area instead of the previous circular area; or

iv) determining a circular area centered at the initial estimate of the position of the mobile device with a radius equal to a product of the location confidence value multiplied by a scale factor;

determining if the circular area includes no more than a threshold number of sections;
if the circular area includes no more than the threshold number of sections, defining the area as the circular area; and

if the circular area include at least the threshold number of sections, determining a new circular area centered at the initial estimate of the position of the mobile device with a radius equal to a product of the location confidence value multiplied by another scale factor, and then repeating the step of determining if the circular area includes no more than a threshold number of sections using the new circular area instead of the previous circular area.

9. The method of claim 1, wherein determining if the threshold percentage of altitude values meets the threshold condition comprises:

determining if the altitude values of the threshold percentage of altitude values are within a threshold amount of altitude from each other; and
determining that the threshold percentage of altitude values meets the threshold condition when the altitude values of the threshold percentage of altitude values are within the threshold amount of altitude from each other.

10. The method of claim 9, wherein determining if the altitude values of the threshold percentage of altitude values are within a threshold amount of altitude from each other comprises one of:

i) determining a distribution of the altitude values;

using the distribution to determine a percentage of the determined altitude values that are within the threshold amount of altitude from each other; and
determining if the percentage is equal to or greater than the threshold percentage,
wherein the altitude values of the threshold percentage of altitude values are determined to be within the threshold amount of altitude from each other when the percentage is equal to or greater than the threshold percentage; or

ii) determining a distribution of the altitude values;

using the distribution to determine an amount of altitude within which the altitude values of the threshold percentage of the determined altitude values are from each other; and
determining if the amount of altitude is equal to or less than the threshold amount of altitude,
wherein the altitude values of the threshold percentage of altitude values are determined to be within the threshold amount of altitude from each other when the amount of altitude is equal to or less than the threshold amount of altitude.

11. The method of claim 1, wherein determining if the threshold percentage of altitude values meets the threshold condition comprises:

determining if the altitude values of the threshold percentage of altitude values are within a threshold amount of altitude from a computed mean or median value of the altitude values; and
determining that the threshold percentage of altitude values meets the threshold condition when the altitude values of the threshold percentage of altitude values are within the threshold amount of altitude from the computed mean or median value of the altitude values.

12. The method of claim 11, wherein determining if the altitude values of the threshold percentage of altitude values are within a threshold amount of altitude from a computed mean or median value of the altitude values comprises:

determining a distribution of the altitude values;
using the distribution to determine a percentage of the determined altitude values that are within the threshold amount of altitude from the computed mean or median value of the altitude values; and
determining if the percentage is equal to or greater than the threshold percentage,
wherein the altitude values of the threshold percentage of altitude values are determined to be within the threshold amount of altitude from the computed mean or median value of the altitude values when the percentage is equal to or greater than the threshold percentage.

13. The method of claim 11, wherein determining if the altitude values of the threshold percentage of altitude values are within a threshold amount of altitude from a computed mean or median value of the altitude values comprises:

determining a distribution of the altitude values;

using the distribution to determine an amount of altitude within which the altitude values of the threshold percentage of the determined altitude values are from the computed mean or median value of the altitude values; and determining if the amount of altitude is equal to or less than the threshold amount of altitude,

wherein the altitude values of the threshold percentage of altitude values are determined to be within the threshold amount of altitude from the computed mean or median value of the altitude values when the amount of altitude is equal to or less than the threshold amount of altitude.

14. One or more non-transitory machine-readable media embodying program instructions that, when executed by one or more machines, cause the one or more machines to implement the method of any of claims 1-13.

15. A system for determining when an estimated altitude of a mobile device can be used for calibration or location determination, the system comprising one or more machines configured to perform the method of any of claims 1-13.

**Patentansprüche**

1. Verfahren zum Bestimmen, wann eine geschätzte Höhe einer mobilen Vorrichtung zur Kalibrierung oder Standortbestimmung verwendet werden kann, wobei das Verfahren umfasst:

Bestimmen eines Bereichs, in dem sich die mobile Vorrichtung voraussichtlich befinden wird, wobei der Bereich eine Vielzahl von Abschnitten umfasst, wobei jeder Abschnitt der Vielzahl von Abschnitten eine Geländekachel ist;
Bestimmen eines Höhenwerts des Abschnitts für jeden Abschnitt der Vielzahl von Abschnitten in dem Bereich;
Bestimmen, ob ein Schwellenprozentsatz der Höhenwerte eine Schwellenbedingung erfüllt; und
Bestimmen, dass die geschätzte Höhe der mobilen Vorrichtung zum Bestimmen einer Position der mobilen Vorrichtung oder zum Kalibrieren eines Drucksensors der mobilen Vorrichtung verwendet werden kann, wenn der Schwellenprozentsatz der Höhenwerte die Schwellenbedingung erfüllt, wobei die geschätzte Höhe der mobilen Vorrichtung unter Verwendung eines durch den Drucksensor der mobilen Vorrichtung gemessenen Drucks bestimmt wird.

2. Verfahren nach Anspruch 1, wobei das Verfahren ferner umfasst:
Kalibrieren des Drucksensors der mobilen Vorrichtung unter Verwendung der geschätzten Höhe und eines repräsentativen Höhenwerts für den Bereich, der unter Verwendung der Höhenwerte bestimmt wird.

3. Verfahren nach Anspruch 1, wobei das Verfahren ferner umfasst:
Bestimmen, ob die geschätzte Höhe genau ist, indem bestimmt wird, ob die geschätzte Höhe innerhalb eines Schwellenfehlerwerts von einem repräsentativen Höhenwert für den Bereich liegt.

4. Verfahren nach Anspruch 1, wobei das Bestimmen eines Bereichs, in dem sich die mobile Vorrichtung voraussichtlich befinden wird, umfasst:

Bestimmen einer Anfangsschätzung einer Position der mobilen Vorrichtung; und
Definieren des Bereichs als die Anfangsschätzung der Position der mobilen Vorrichtung und mindestens eine Schwellenanzahl von Abschnitten mit bekannten Höhen beinhaltend.

5. Verfahren nach Anspruch 1, wobei das Bestimmen eines Bereichs, in dem sich die mobile Vorrichtung voraussichtlich befinden wird, umfasst:

Bestimmen einer Anfangsschätzung einer Position der mobilen Vorrichtung; und
Definieren des Bereichs als die Anfangsschätzung der Position der mobilen Vorrichtung und nicht mehr als eine Schwellenanzahl von Abschnitten mit bekannten Höhen beinhaltend.

6. Verfahren nach Anspruch 1, wobei das Bestimmen eines Bereichs, in dem sich die mobile Vorrichtung voraussichtlich befinden wird, umfasst:

Bestimmen, dass sich die mobile Vorrichtung in einem Netzbereich befindet, der definierte Grenzen aufweist; und
Definieren des Bereichs als den Netzbereich.

**7.** Verfahren nach Anspruch 1, wobei das Bestimmen eines Bereichs, in dem sich die mobile Vorrichtung voraussichtlich befinden wird, umfasst:

Bestimmen einer Anfangsschätzung einer Position der mobilen Vorrichtung;
Bestimmen eines Standortkonfidenzwerts; und
Definieren des Bereichs unter Verwendung der Anfangsschätzung der Position der mobilen Vorrichtung und des Standortkonfidenzwerts.

**8.** Verfahren nach Anspruch 7, wobei das Definieren des Bereichs eines von Folgenden umfasst:

i) Bestimmen eines kreisförmigen Bereichs, der um die Anfangsschätzung der Position der mobilen Vorrichtung zentriert ist, mit einem Radius, der gleich dem Standortkonfidenzwert ist; und
Definieren des Bereichs als den kreisförmigen Bereich;
ii) Bestimmen eines kreisförmigen Bereichs, der um die Anfangsschätzung der Position der mobilen Vorrichtung zentriert ist, mit einem Radius, der gleich einem Produkt des Standortkonfidenzwerts multipliziert mit einem Skalenfaktor ist; und
Definieren des Bereichs als den kreisförmigen Bereich;
iii) Bestimmen eines kreisförmigen Bereichs, der um die Anfangsschätzung der Position der mobilen Vorrichtung zentriert ist, mit einem Radius, der gleich einem Produkt des Standortkonfidenzwerts multipliziert mit einem Skalenfaktor ist;

Bestimmen, ob der kreisförmige Bereich mindestens eine Schwellenanzahl von Abschnitten beinhaltet;
Definieren des Bereichs als den kreisförmigen Bereich, wenn der kreisförmige Bereich mindestens die Schwellenanzahl von Abschnitten beinhaltet; und
Bestimmen eines neuen kreisförmigen Bereichs, der um die Anfangsschätzung der Position der mobilen Vorrichtung zentriert ist, mit einem Radius, der gleich einem Produkt des Standortkonfidenzwerts multipliziert mit einem anderen Skalenfaktor ist, wenn der kreisförmige Bereich nicht mindestens die Schwellenanzahl von Abschnitten beinhaltet, und dann Wiederholen des Schritts des Bestimmens, ob der kreisförmige Bereich mindestens eine Schwellenanzahl von Abschnitten beinhaltet, unter Verwendung des neuen kreisförmigen Bereichs anstelle des vorherigen kreisförmigen Bereichs; oder

iv) Bestimmen eines kreisförmigen Bereichs, der um die Anfangsschätzung der Position der mobilen Vorrichtung zentriert ist, mit einem Radius, der gleich einem Produkt des Standortkonfidenzwerts multipliziert mit einem Skalenfaktor ist;

Bestimmen, ob der kreisförmige Bereich nicht mehr als eine Schwellenanzahl von Abschnitten beinhaltet;
Definieren des Bereichs als den kreisförmigen Bereich, wenn der kreisförmige Bereich nicht mehr als die Schwellenanzahl von Abschnitten beinhaltet; und
Bestimmen eines neuen kreisförmigen Bereichs, der um die Anfangsschätzung der Position der mobilen Vorrichtung zentriert ist, mit einem Radius, der gleich einem Produkt des Standortkonfidenzwerts multipliziert mit einem anderen Skalenfaktor ist, wenn der kreisförmige Bereich mindestens die Schwellenanzahl von Abschnitten beinhaltet, und dann Wiederholen des Schritts des Bestimmens, ob der kreisförmige Bereich nicht mehr als eine Schwellenanzahl von Abschnitten beinhaltet, unter Verwendung des neuen kreisförmigen Bereichs anstelle des vorherigen kreisförmigen Bereichs.

**9.** Verfahren nach Anspruch 1, wobei das Bestimmen, ob der Schwellenprozentsatz von Höhenwerten die Schwellenbedingung erfüllt, umfasst:

Bestimmen, ob die Höhenwerte des Schwellenprozentsatzes von Höhenwerten innerhalb eines Schwellenhöhenbetrags voneinander liegen; und
Bestimmen, dass der Schwellenprozentsatz von Höhenwerten die Schwellenbedingung erfüllt, wenn die Höhenwerte der Schwellenprozentsätze von Höhenwerten innerhalb des Schwellenhöhenbetrags voneinander liegen.

**10.** Verfahren nach Anspruch 9, wobei das Bestimmen, ob die Höhenwerte des Schwellenprozentsatzes von Höhenwerten innerhalb eines Schwellenhöhenbetrags voneinander liegen, eines der Folgenden umfasst:

i) Bestimmen einer Verteilung der Höhenwerte;

Verwenden der Verteilung zum Bestimmen eines Prozentsatzes der bestimmten Höhenwerte, die innerhalb des Höhenschwellenwerts voneinander liegen; und
Bestimmen, ob der Prozentsatz gleich oder größer als der Schwellenprozentsatz ist,
wobei bestimmt wird, dass die Höhenwerte des Schwellenprozentsatzes von Höhenwerten innerhalb des Schwellenhöhenbetrags voneinander liegen, wenn der Prozentsatz gleich oder größer als der Schwellenprozentsatz ist; oder

ii) Bestimmen einer Verteilung der Höhenwerte;

Verwenden der Verteilung zum Bestimmen eines Höhenbetrags, innerhalb dessen die Höhenwerte des Schwellenprozentsatzes der bestimmten Höhenwerte voneinander liegen; und
Bestimmen, ob der Höhenbetrag gleich oder kleiner als der Schwellenhöhenbetrag ist,
wobei bestimmt wird, dass die Höhenwerte des Schwellenprozentsatzes von Höhenwerten innerhalb des Schwellenhöhenbetrags voneinander liegen, wenn der Höhenbetrag gleich oder kleiner als der Schwellenhöhenbetrag ist.

11. Verfahren nach Anspruch 1, wobei das Bestimmen, ob der Schwellenprozentsatz von Höhenwerten die Schwellenbedingung erfüllt, umfasst:
Bestimmen, ob die Höhenwerte des Schwellenprozentsatzes von Höhenwerten innerhalb eines Schwellenhöhenbetrags aus einem berechneten Mittel- oder Medianwert der Höhenwerte liegen; und Bestimmen, dass der Schwellenprozentsatz von Höhenwerten die Schwellenbedingung erfüllt, wenn die Höhenwerte des Schwellenprozentsatzes von Höhenwerten innerhalb des Schwellenhöhenbetrags aus einem berechneten Mittel- oder Medianwert der Höhenwerte liegen.

12. Verfahren nach Anspruch 11, wobei das Bestimmen, ob die Höhenwerte des Schwellenprozentsatzes von Höhenwerten innerhalb eines Schwellenhöhenbetrags von einem berechneten Mittel- oder Medianwert der Höhenwerte liegen, umfasst:

Bestimmen einer Verteilung der Höhenwerte;
Verwenden der Verteilung zum Bestimmen eines Prozentsatzes der bestimmten Höhenwerte, die innerhalb des Schwellenhöhenbetrags aus dem berechneten Mittel- oder Medianwert der Höhenwerte liegen; und
Bestimmen, ob der Prozentsatz gleich oder größer als der Schwellenprozentsatz ist,
wobei bestimmt wird, dass die Höhenwerte des Schwellenprozentsatzes von Höhenwerten innerhalb des Schwellenhöhenbetrags aus einem berechneten Mittel- oder Medianwert der Höhenwerte liegen, wenn der Prozentsatz gleich oder größer als der Schwellenprozentsatz ist.

13. Verfahren nach Anspruch 11, wobei das Bestimmen, ob die Höhenwerte des Schwellenprozentsatzes von Höhenwerten innerhalb eines Schwellenhöhenbetrags von einem berechneten Mittel- oder Medianwert der Höhenwerte liegen, umfasst:

Bestimmen einer Verteilung der Höhenwerte;
Verwenden der Verteilung zum Bestimmen eines Höhenbetrags, innerhalb dessen die Höhenwerte des Schwellenprozentsatzes der Höhenwerte aus dem berechneten Mittel- oder Medianwert der Höhenwerte liegen; und
Bestimmen, ob der Höhenbetrag gleich oder kleiner als der Schwellenhöhenbetrag ist,
wobei bestimmt wird, dass die Höhenwerte des Schwellenprozentsatzes von Höhenwerten innerhalb des Schwellenhöhenbetrags von einem berechneten Mittel- oder Medianwert der Höhenwerte liegen, wenn der Höhenbetrag gleich oder kleiner als der Schwellenhöhenbetrag ist.

14. Ein oder mehrere nichttransitorische maschinenlesbare Medien, die Programmanweisungen verkörpern, die bei Ausführung durch eine oder mehrere Maschinen die eine oder die mehreren Maschinen veranlassen, das Verfahren nach einem der Ansprüche 1-13 zu implementieren.

15. System zum Bestimmen, wann eine geschätzte Höhe einer mobilen Vorrichtung zur Kalibrierung oder Standortbestimmung verwendet werden kann, wobei das System eine oder mehrere Maschinen umfasst, die zum Ausführen des Verfahrens nach einem der Ansprüche 1-13 konfiguriert sind.

**Revendications**

1. Procédé pour déterminer quand une altitude estimée d'un dispositif mobile peut être utilisée pour un étalonnage ou une détermination d'emplacement, le procédé comprenant :

   la détermination d'une zone dans laquelle le dispositif mobile est censé se trouver, la zone comprenant une pluralité de sections, chaque section de la pluralité de sections étant une tuile de terrain ;
   pour chaque section de la pluralité de sections dans la zone, la détermination d'une valeur d'altitude de cette section ;
   le fait de déterminer si un pourcentage seuil des valeurs d'altitude satisfait à une condition seuil ; et
   si le pourcentage seuil de valeurs d'altitude satisfait à la condition seuil, le fait de déterminer que l'altitude estimée du dispositif mobile peut être utilisée pour déterminer une position du dispositif mobile ou pour étalonner un capteur de pression du dispositif mobile, l'altitude estimée du dispositif mobile étant déterminée en utilisant une pression mesurée par le capteur de pression du dispositif mobile.

2. Procédé selon la revendication 1, dans lequel le procédé comprend en outre :
   l'étalonnage du capteur de pression du dispositif mobile en utilisant l'altitude estimée et une valeur d'altitude représentative pour la zone qui est déterminée en utilisant les valeurs d'altitude.

3. Procédé selon la revendication 1, dans lequel le procédé comprend en outre :
   le fait de déterminer si l'altitude estimée est exacte en déterminant si l'altitude estimée se situe dans une valeur d'erreur seuil à partir d'une valeur d'altitude représentative pour la zone.

4. Procédé selon la revendication 1, dans lequel la détermination d'une zone dans laquelle le dispositif mobile est censé se trouver comprend :

   la détermination d'une estimation initiale d'une position du dispositif mobile ; et
   la définition de la zone comme incluant l'estimation initiale de la position du dispositif mobile et au moins un nombre seuil de sections avec des altitudes connues.

5. Procédé selon la revendication 1, dans lequel la détermination d'une zone dans laquelle le dispositif mobile est censé se trouver comprend :

   la détermination d'une estimation initiale d'une position du dispositif mobile ; et
   la définition de la zone comme incluant l'estimation initiale de la position du dispositif mobile et n'incluant pas plus qu'un nombre seuil de sections avec des altitudes connues.

6. Procédé selon la revendication 1, dans lequel la détermination d'une zone dans laquelle le dispositif mobile est censé se trouver comprend :

   le fait de déterminer que le dispositif mobile se trouve dans une zone de réseau qui a des limites définies ; et
   la définition de la zone comme étant la zone de réseau.

7. Procédé selon la revendication 1, dans lequel la détermination d'une zone dans laquelle le dispositif mobile est censé se trouver comprend :

   la détermination d'une estimation initiale d'une position du dispositif mobile ;
   la détermination d'une valeur de confiance d'emplacement ; et
   la définition de la zone en utilisant l'estimation initiale de la position du dispositif mobile et la valeur de confiance d'emplacement.

8. Procédé selon la revendication 7, dans lequel la définition de la zone comprend l'un parmi :

   i) la détermination d'une zone circulaire centrée sur l'estimation initiale de la position du dispositif mobile avec un rayon égal à la valeur de confiance d'emplacement ; et
   la définition de la zone comme étant la zone circulaire ;
   ii) la détermination d'une zone circulaire centrée sur l'estimation initiale de la position du dispositif mobile avec un rayon égal à un produit de la valeur de confiance d'emplacement multipliée par un facteur d'échelle ; et

la définition de la zone comme étant la zone circulaire ;

iii) la détermination d'une zone circulaire centrée sur l'estimation initiale de la position du dispositif mobile avec un rayon égal à un produit de la valeur de confiance d'emplacement multipliée par un facteur d'échelle ;

le fait de déterminer si la zone circulaire inclut au moins un nombre seuil de sections ;

si la zone circulaire inclut au moins le nombre seuil de sections, la définition de la zone comme étant la zone circulaire ; et

si la zone circulaire n'inclut pas au moins le nombre seuil de sections, la détermination d'une nouvelle zone circulaire centrée sur l'estimation initiale de la position du dispositif mobile avec un rayon égal à un produit de la valeur de confiance d'emplacement multipliée par un autre facteur d'échelle, puis la répétition de l'étape consistant à déterminer si la zone circulaire inclut au moins un nombre seuil de sections en utilisant la nouvelle zone circulaire au lieu de la zone circulaire précédente ; ou

iv) la détermination d'une zone circulaire centrée sur l'estimation initiale de la position du dispositif mobile avec un rayon égal à un produit de la valeur de confiance d'emplacement multipliée par un facteur d'échelle ;

le fait de déterminer si la zone circulaire n'inclut pas plus qu'un nombre seuil de sections ;

si la zone circulaire n'inclut pas plus que le nombre seuil de sections, la définition de la zone comme étant la zone circulaire ; et

si la zone circulaire inclut au moins le nombre seuil de sections, la détermination d'une nouvelle zone circulaire centrée sur l'estimation initiale de la position du dispositif mobile avec un rayon égal à un produit de la valeur de confiance d'emplacement multipliée par un autre facteur d'échelle, puis la répétition de l'étape consistant à déterminer si la zone circulaire n'inclut pas plus qu'un nombre seuil de sections en utilisant la nouvelle zone circulaire au lieu de la zone circulaire précédente.

9. Procédé selon la revendication 1, dans lequel le fait de déterminer si le pourcentage seuil de valeurs d'altitude satisfait à la condition seuil comprend :

le fait de déterminer si les valeurs d'altitude du pourcentage seuil de valeurs d'altitude ne dépassent pas une quantité seuil d'altitude les unes par rapport aux autres ; et

le fait de déterminer que le pourcentage seuil de valeurs d'altitude satisfait à la condition seuil lorsque les valeurs d'altitude du pourcentage seuil de valeurs d'altitude ne dépassent pas la quantité seuil d'altitude les unes par rapport aux autres.

10. Procédé selon la revendication 9, dans lequel le fait de déterminer si les valeurs d'altitude du pourcentage seuil de valeurs d'altitude ne dépassent pas une quantité seuil d'altitude les unes par rapport aux autres comprend l'un parmi :

i) la détermination d'une distribution des valeurs d'altitude ;

l'utilisation de la distribution pour déterminer un pourcentage des valeurs d'altitude déterminées qui ne dépassent pas la quantité seuil d'altitude les unes par rapport aux autres ; et

le fait de déterminer si le pourcentage est supérieur ou égal au pourcentage seuil,

dans lequel les valeurs d'altitude du pourcentage seuil de valeurs d'altitude sont déterminées comme ne dépassant pas la quantité seuil d'altitude les unes par rapport aux autres lorsque le pourcentage est supérieur ou égal au pourcentage seuil ; ou

ii) la détermination d'une distribution des valeurs d'altitude ;

l'utilisation de la distribution pour déterminer une quantité d'altitude à laquelle les valeurs d'altitude du pourcentage seuil des valeurs d'altitude déterminées se situent les unes par rapport aux autres ; et

le fait de déterminer si la quantité d'altitude est inférieure ou égale à la quantité seuil d'altitude,

dans lequel les valeurs d'altitude du pourcentage seuil de valeurs d'altitude sont déterminées comme ne dépassant pas la quantité seuil d'altitude les unes par rapport aux autres lorsque la quantité d'altitude est inférieure ou égale à la quantité seuil d'altitude.

11. Procédé selon la revendication 1, dans lequel le fait de déterminer si le pourcentage seuil de valeurs d'altitude satisfait à la condition seuil comprend :

le fait de déterminer si les valeurs d'altitude du pourcentage seuil des valeurs d'altitude ne dépassent pas une quantité seuil d'altitude à partir d'une valeur moyenne ou médiane calculée des valeurs d'altitude ; et
le fait de déterminer que le pourcentage seuil de valeurs d'altitude satisfait à la condition seuil lorsque les valeurs d'altitude du pourcentage seuil de valeurs d'altitude ne dépassent pas la quantité seuil d'altitude à partir de la valeur moyenne ou médiane calculée des valeurs d'altitude.

12. Procédé selon la revendication 11, dans lequel le fait de déterminer si les valeurs d'altitude du pourcentage seuil de valeurs d'altitude ne dépassent pas une quantité seuil d'altitude à partir d'une valeur moyenne ou médiane calculée des valeurs d'altitude comprend :

la détermination d'une distribution des valeurs d'altitude ;
l'utilisation de la distribution pour déterminer un pourcentage des valeurs d'altitude déterminées qui ne dépassent pas la quantité seuil d'altitude à partir de la valeur moyenne ou médiane calculée des valeurs d'altitude ; et
le fait de déterminer si le pourcentage est supérieur ou égal au pourcentage seuil,
dans lequel les valeurs d'altitude du pourcentage seuil de valeurs d'altitude sont déterminées comme ne dépassant pas la quantité seuil d'altitude à partir de la valeur moyenne ou médiane calculée des valeurs d'altitude lorsque le pourcentage est supérieur ou égal au pourcentage seuil.

13. Procédé selon la revendication 11, dans lequel le fait de déterminer si les valeurs d'altitude du pourcentage seuil de valeurs d'altitude ne dépassent pas une quantité seuil d'altitude à partir d'une valeur moyenne ou médiane calculée des valeurs d'altitude comprend :

la détermination d'une distribution des valeurs d'altitude ;
l'utilisation de la distribution pour déterminer une quantité d'altitude à laquelle les valeurs d'altitude du pourcentage seuil des valeurs d'altitude déterminées se situent à partir de la valeur moyenne ou médiane calculée des valeurs d'altitude ; et
le fait de déterminer si la quantité d'altitude est inférieure ou égale à la quantité seuil d'altitude,
dans lequel les valeurs d'altitude du pourcentage seuil de valeurs d'altitude sont déterminées comme ne dépassant pas la quantité seuil d'altitude à partir de la valeur moyenne ou médiane calculée des valeurs d'altitude lorsque la quantité d'altitude est inférieure ou égale à la quantité seuil d'altitude.

14. Un ou plusieurs supports non transitoires lisibles par machine incorporant des instructions de programme qui, lorsqu'elles sont exécutées par une ou plusieurs machines, amènent les une ou plusieurs machines à mettre en œuvre le procédé selon l'une quelconque des revendications 1 à 13.

15. Système pour déterminer quand une altitude estimée d'un dispositif mobile peut être utilisée pour un étalonnage ou une détermination d'emplacement, le système comprenant une ou plusieurs machines configurées pour exécuter le procédé selon l'une quelconque des revendications 1 à 13.

```
┌─────────────────────────────────────────────────────────┐
│   Determine when an estimated altitude of a mobile       │
│   device can be used for calibration or location         │
│   determination                                          │
└─────────────────────────────────────────────────────────┘
                          │
                          ▼
┌─────────────────────────────────────────────────────────┐
│  Determine an area in which a mobile device is expected   │
│  (e.g., known or believed) to reside  (step 110)          │
└─────────────────────────────────────────────────────────┘
                          │
                          ▼
┌─────────────────────────────────────────────────────────┐
│  For each section of a plurality of sections in the area, │
│  determine an altitude value of that section (step 120)   │
└─────────────────────────────────────────────────────────┘
                          │
                          ▼
         Determine
    if the altitude values meet a threshold condition
         (step 130)
                          │
                         Yes
                          ▼
┌─────────────────────────────────────────────────────────┐
│  If the altitude values meet the threshold condition,     │
│  determine that an estimated altitude of a mobile device  │
│  can be used for calibration or location determination    │
│  (step 140)                                               │
└─────────────────────────────────────────────────────────┘
                          │
                          ▼
```

No

| Calibrate the pressure sensor of the mobile device using the estimated altitude and a representative altitude value for the area that is determined using the altitude values (optional step 150a) | Determine if the estimated altitude is accurate by determining if the estimated altitude is within a threshold error value from a representative altitude value for the area (optional step 150b) |

FIG. 1

FIG. 2A

Environment 200

Satellites 250
Signals 253

213
210

Altitude 4 (e.g., 3 meters)

Altitude 3 (e.g., 1 meter)

Altitude 2 (e.g., 0.5 meter)

Mobile device 220
(true position b)

Signal 213

Transmitter 210

213
210

Area of possible positions at which mobile
device is located (e.g., at least P% of altitudes
in the area do not meet threshold condition)

Signals to/from
other things

Altitude 1 (e.g., 0 meters)

Server(s)
230

FIG. 2B

EP 3 803 271 B1

37

Environment 201

Altitude 3 (e.g., 3.5 meter)
Altitude 2 (e.g., 0.5 meter)
Signal 263
Beacon 260
Altitude 1 (e.g., 0 meters)
Mobile device 220 (true position c)

Area of possible positions at which mobile device is located based on range of network beacon that transmits signal received by the mobile device (e.g., at least P% of altitudes in the area are within D units of distance from each other)

FIG. 2C

Environment 201

Mobile device 220
(true position *d*)

263

260

Altitude 3 (e.g., 3.5 meter)

Altitude 2 (e.g., 0.5 meter)

Area of possible positions at which mobile device is located
based on range of network beacon that transmits signal received
by the mobile device (e.g., at least *P*% of altitudes in the area are
not within *D* units of distance from each other)

Altitude 1 (e.g., 0 meters)

**FIG. 2D**

Determine an area in which a mobile device is known or believed to reside (step 110)

Determine an initial estimate of a position of the mobile device (e.g., latitude, longitude) (step 311)

Define the area as including the initial estimate of the position of the mobile device and at least a threshold number of sections with known altitudes (step 313)

**FIG. 3**

Determine an area in which a mobile device is known or believed to reside (step 110)

Determine an initial estimate of a position of the mobile device (e.g., latitude, longitude) (step 411)

Define the area as including the initial estimate of the position of the mobile device and no more than a threshold number of sections with known altitudes (step 413)

**FIG. 4**

Determine an area in which a mobile device is known or believed to reside (step 110)

Determine that the mobile device resides in a network area that has defined boundaries (step 511)

Define the area as the network area (step 512)

FIG. 5

Determine an area in which a mobile device is known or believed to reside (step 110)

Determine an initial estimate of a position of the mobile device (e.g., latitude, longitude) (step 611)

Determine a location confidence value (C) (step 612)

Define the area using the initial estimate of the position of the mobile device and the location confidence value (and optionally a predefined scale factor associated with a type of the mobile device) (step 613)

FIG. 6

Define the area using the initial estimate of the position of the mobile device and the location confidence value (step 613)

Determine a circular area centered at the initial estimate of the position of the mobile device with a radius equal to the location confidence value (step 713a)

Define the area as the circular area (step 713b)

**FIG. 7**

Define the area using the initial estimate of the position of the mobile device and the location confidence value (step 613)

Determine a circular area centered at the initial estimate of the position of the mobile device with a radius equal to a product of the location confidence value multiplied by a scale factor (step 813a)

Define the area as the circular area (step 813b)

**FIG. 8**

Define the area using the initial estimate of the position of the mobile device and the location confidence value (step 613)

$n = 1$

Determine an $n$th circular area centered at the initial estimate of the position of the mobile device with a radius equal to a product of the location confidence value multiplied by an $n$th scale factor (step 913a)

Determine if the $n$th circular area includes at least a threshold number of sections (step 913b)

No

Yes

Increment $n$ by 1

Define the area as the $n$th circular area (step 913c)

Determine an $n$th circular area centered at the initial estimate of the position of the mobile device with a radius equal to a product of the location confidence value multiplied by an $n$th scale factor (step 913d)

FIG. 9

Define the area using the initial estimate of the position of the
mobile device and the location confidence value (step 613)

$n = 1$

Determine an $n$th circular area centered at the initial estimate of the
position of the mobile device with a radius equal to a product of the
location confidence value multiplied by an $n$th scale factor (step 1013a)

Determine if the $n$th circular area includes no more than a threshold
number of sections (step 1013b)

No

Yes

Increment $n$ by 1

Define the area as the $n$th circular area (step 1013c)

Determine an $n$th circular area centered at the initial estimate of the
position of the mobile device with a radius equal to a product of the
location confidence value multiplied by an $n$th scale factor (step 1013d)

FIG. 10

Determine if the altitude values meet a threshold condition
(step 130)

Determining if a threshold percentage of the determined altitude values are within a
threshold amount of altitude from each other (step 1131)

Determine a distribution of the altitude values (step 1131a) – e.g., for each
altitude of a plurality of altitudes, determine the number of sections with an
altitude value matching that altitude

Use the distribution to (i) determine a percentage of the determined altitude
values that are within the threshold amount of altitude from each other, or
(ii) determine an amount of altitude within which the threshold percentage
of the determined values are from each other (step 1131b)

(i) Determine if the percentage is equal to or greater than the threshold
percentage, or (ii) determine if the amount of altitude is equal to or less
than the threshold amount of altitude (step 1131c)

Determining that the altitude values meet the threshold condition when the threshold
percentage of the determined altitude values are within the threshold amount of altitude
from each other (step 1132)

Determine that the threshold percentage of the determined altitude values
are within the threshold amount of altitude from each other when (i) the
percentage is equal to or greater than the threshold percentage, or (ii) the
amount of altitude is equal to or less than the threshold amount of altitude
(step 1132a)

FIG. 11

Determine if the altitude values meet a threshold condition
(step 130)

Determining if a threshold percentage of the determined altitude values are within a threshold amount of altitude from a computed mean value of the altitude values (step 1231)

Determine a distribution of the altitude values (step 1231a) – e.g., for each altitude of a plurality of altitudes, determine the number of sections with an altitude value matching that altitude

Use the distribution to (i) determine a percentage of the determined altitude values that are within the threshold amount of altitude from the mean value of the altitude values, or (ii) determine an amount of altitude within which the threshold percentage of the determined values are from the mean value of the altitude values (step 1231b)

(i) Determine if the percentage is equal to or greater than the threshold percentage, or (ii) determine if the amount of altitude is equal to or less than the threshold amount of altitude (step 1231c)

Determining that the altitude values meet the threshold condition when the threshold percentage of the determined altitude values are within the threshold amount of altitude from the mean value of the altitude values (step 1232)

Determine that the threshold percentage of the determined altitude values are within the threshold amount of altitude from the mean value of the altitude values when (i) the percentage is equal to or greater than the threshold percentage, or (ii) the amount of altitude is equal to or less than the threshold amount of altitude (step 1232a)

FIG. 12

**FIG. 13A**

**FIG. 13B**

FIG. 13C

FIG. 13D

FIG. 13E

EP 3 803 271 B1

EP 3 803 271 B1

Pressure (Pa)

------- Pout,1
--- · -- Pbldg,1
·········· Pcar,1

Time Period 1

Environment 100 (time period 1)

Pout,1

Pcar,1

Pbldg,1

Car

Mobile device 120
with a pressure sensor (e.g.,
used for altitude computation)

Building

Altitude 1

During time period 1: a pressure profile outside (Pout,1), a pressure profile in the car (Pcar,1), and a pressure profile in the building (Pbldg,1) are aligned since HVAC effect in the car and the building is small or non-existent.

**FIG. 14A**

Pressure (Pa)

— Pout,2
⋯⋯ Pcar,2

Time Period 2

Environment 100 (time period 2)

120

Pcar,2

Car

Pout,2

Building

Altitude 1

During time period 2: a pressure profile outside (Pout,2) and a pressure profile in the car (Pcar,2) are not aligned due to HVAC effect in the car.

FIG. 14B

$P_{out,3}$
$P_{bldg,3}$

Environment 100 (time period 3)

Pressure (Pa)

Time Period 3

$P_{out,3}$

$P_{bldg,3}$

120

Car

Building

Altitude 1

During time period 3: a pressure profile outside ($P_{out,3}$) and a pressure profile in the building ($P_{bldg,3}$) are not aligned due to HVAC effect in the building.

FIG. 14C

Determining if a mobile device is located inside an
environment with HVAC conditions

N = 1

Detect a change in pressure measured by a mobile device during an Nth predefined
time period that meets or exceeds a threshold value of change, and optionally determine
if the change is due to sensor failure (step 1510)

Increment
N by 1

Yes

Determine if one or more measurements of an inertial sensor of the
mobile device indicate that the mobile device vertically moved during the Nth
predefined time period (step 1520)

No

Determine that the mobile device is located in an environment with an HVAC effect that
caused the change in pressure (step 1530)

Determine an estimated position (e.g., latitude and longitude), and optionally determine
a location confidence value associated with the estimated position (step 1540)

Determine if the estimated position is inside a building, or optionally if a threshold
amount of a location confidence area is inside the building (step 1550)

Yes

No

Determine that the mobile device is
located in the building (step 1560a)

Determine that the mobile device is
located in a vehicle (step 1560b)

Perform additional operations based on where the mobile device is determined to be
located (step 1570)

FIG. 15

**Detect a change in pressure measured by a mobile device during an Nth predefined time period that meets or exceeds a threshold value of change (step 1510)**

Collect a plurality of pressure measurements using a pressure sensor of the mobile device during the Nth predefined time period (step 1611a)

Determine, based on the plurality of pressure measurements, a range of pressures that were measured during the during the Nth predefined time period (step 1613a)

Increment N by 1

No — Determine if the range of pressure meets or exceeds a threshold pressure range value (step 1615a)

Yes (meets or exceeds)

Determine that the threshold change in pressure measured by the mobile device during the Nth predefined time period has been detected (step 1617a)

**FIG. 16A**

**Detect a change in pressure measured by a mobile device during an Nth predefined time period that meets or exceeds a threshold value of change (step 1510)**

Collect a plurality of pressure measurements using a pressure sensor of the mobile device during the Nth predefined time period (step 1611b)

Determine, based on the plurality of pressure measurements, a distribution of the pressure measurements that were measured during the during the Nth predefined time period (step 1613b)

Increment N by 1

No — Determine if the distribution meets or exceeds a threshold distribution value (step 1615b)

Yes (meets or exceeds)

Determine that the threshold change in pressure measured by the mobile device during the Nth predefined time period has been detected (step 1617b)

**FIG. 16B**

Detect a change in pressure measured by a mobile device during an Nth predefined time period that meets or exceeds a threshold value of change (step 1510)

Collect a plurality of pressure measurements using a pressure sensor of the mobile device during the Nth predefined time period (step 1611c)

Determine, based on the plurality of pressure measurements, a range of pressures that were measured during the during the Nth predefined time period (step 1613c)

Determine, based on the plurality of pressure measurements, a distribution of the pressure measurements that were measured during the during the Nth predefined time period (step 1614c)

Determine if the range of pressure meets or exceeds a threshold pressure range value, or if the distribution meets or exceeds a threshold distribution value (step 1615c)

Increment N by 1

No

Yes (either or both meets or exceeds)

Determine that the threshold change in pressure measured by the mobile device during the Nth predefined time period has been detected (step 1617c)

**FIG. 16C**

Detect a change in pressure measured by a mobile device during an Nth predefined time period that meets or exceeds a threshold value of change (step 1510)

Collect two pressure measurements using a pressure sensor of the mobile device during the Nth predefined time period (step 1611d)

Determine a difference between the two pressure measurements (step 1613d)

Determine if the difference between the two pressure measurements meets or exceeds a threshold pressure difference value (step 1615d)

Increment N by 1

No

Yes (meets or exceeds)

Determine that the threshold change in pressure measured by the mobile device during the Nth predefined time period has been detected (step 1617d)

**FIG. 16D**

FIG. 17

**FIG. 18A**

**FIG. 18B**

FIG. 19

Determining when to calibrate a pressure sensor of a mobile device

N = 1

For each metric of a plurality of metrics, determining a value of that metric based on how data collected at an Nth location of a mobile device relates to a threshold condition of that metric (step 2010)

For each metric of the plurality of metrics, determining a weight for that metric (step 2020)

For each metric of the plurality of metrics, determining a weighted metric value by applying the weight for that metric to the determined value of that metric (step 2030)

Increment N by 1

Determining if a pressure sensor of the mobile device should be calibrated using information associated with the Nth location (step 2040)

No

Yes

Calibrating the pressure sensor of the mobile device using the information associated with the first location (step 2050)

**FIG. 20**

Determining if a pressure sensor of the mobile device should be calibrated using information associated with the Nth location (step 2040)

To step incrementing N

Using the weighted metric values to determine a quality of an opportunity to calibrate the pressure sensor of the mobile device using a measurement of pressure at the Nth location that was measured by the pressure sensor (step 2141)

No

Determining whether the determined quality of the opportunity to calibrate exceeds a threshold quality value (step 2143)

To step 2050

Yes

**FIG. 21**

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016356875 A1
- US 2016245716 A1
- US 8130141 B
- US 20120182180 A

**Non-patent literature cited in the description**

- **SANKARAN.** Using Mobile Phone Barometer for Low-Power Transportation Context Detection. *Proceedings of the 12th ACM Conference on Embedded Network Sensor Systems,* 03 November 2014